# EUROPEAN PATENT APPLICATION

(11) **EP 4 800 349 A1**
(43) Date of publication of application: **02.09.2026**
(21) Application number: 26160887.1
(22) Date of filing: 26.02.2026
(51) Int. Cl.: G01B 11/24, G01B 5/20

(54) **SYSTEMS AND METHODS FOR TACTILE PROFILOMETRY**

(30) Priority: 28.02.2025 US 202563765076 P
(71) Applicant: General Electric Company, Cincinnati, Ohio 45215 (US)
(72) Inventor: TRIVEDI, Deepak, Niskayuna, 12309-1027 (US); KUO, Pei-Hsin, Niskayuna, 12309-1027 (US); GRAHAM, Andrew Crispin, Evendale, 45215 (US); KOYITHITTA MEETHAL, Manoj Kumar, 560066 Bengaluru (IN); LIU, Chang, Evendale, 45215 (US)
(74) Representative: Openshaw & Co.

(57) **Abstract**

Provided herein are systems and methods for preforming tactile profilometry. In some aspects, a system (100) for performing tactile profilometry includes a probe (290) (102) with a profilometry sensor apparatus (108). The profilometry sensor apparatus (108) comprises a touch medium (120) having a first side (176A) adjacent to the surface (106) being inspected and a second side (176B) opposite the first side (176A), the second side (176B) having a reflective layer (136). The profilometry sensor apparatus (108) also includes a first light source (124) coupled to a first deformable waveguide (126) to illuminate the reflective layer (136) of the touch medium (120) with a first light beam at a first incidence angle and a light sensor (122) to detect reflected light. A first shaping actuator (128) is operatively coupled to the first deformable waveguide (126) to displace the first deformable waveguide (126). A controller (150) is configured to receive optical data (158) from the light sensor (122) and operate the first shaping actuator (128) to adjust the first incidence angle based on the optical data (158).

## Description

### CROSS-REFERENCE TO RELATED APPLICATIONS

This application claims the benefit of priority of U.S. Provisional Application No. 63/765,076 filed February 28, 2025, which is herein incorporated by reference in its entirety.

### TECHNICAL FIELD

These teachings relate generally to systems and methods for tactile profilometry.

### BACKGROUND

Profilometry is used to measure the surface profile of an object, for example, to measure surface topography of the object. Profilometry may also be used to quantify the surface roughness of the object being inspected and/or to quantify dimensions of surface structures present on the object. Certain methods of profilometry are contact techniques that physically contact a surface that is being inspected to identify surface variations. Other methods of profilometry use non-contact techniques that measure surface topography without physically contacting the object being inspected. The use of profilometry equipment, however, may be restricted in applications where access to the object to be inspected is restricted.

### BRIEF DESCRIPTION OF DRAWINGS

Various needs are at least partially met through provision of the systems and methods for tactile profilometry described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1A is a block diagram of a system for performing tactile profilometry, according to some embodiments;
FIG. 1B is a block diagram of the controller in the system for performing tactile profilometry of FIG. 1A, according to some embodiments;
FIG. 2 is a schematic diagram of a probe for performing tactile profilometry, according to some embodiments;
FIG. 3A is a schematic diagram of a probe for performing tactile profilometry, with the light at a high incidence angle, according to some embodiments;
FIG. 3B is a schematic diagram of a probe for performing tactile profilometry, with the light at a low incidence angle, according to some embodiments;
FIG. 4 is a flow diagram of a method for adjusting the incidence angle of light in the probe of FIGS. 3A and 3B, according to some embodiments;
FIGS. 5A, 5B, and 5C are schematic diagrams of a probe for performing tactile profilometry acquiring optical data from different viewpoints, according to some embodiments;
FIG. 6 shows formulas for determining a surface normal using optical data acquired with different incidence angles, according to some embodiments;
FIG. 7 shows formulas for determining a surface normal using optical data acquired with different viewpoints, according to some embodiments;
FIG. 8 is a block diagram of a method for using optical data from the probes described herein for profilometry and probe control, according to some embodiments;
FIG. 9A is a schematic diagram of a reversible adhesion mechanism comprising a plurality of suction cups, according to some embodiments;
FIGS. 9B-9I are schematic diagrams of the first tactile pad and associated suction cups of FIG. 9A, illustrating schemes for controlling contact pressure according to some embodiments;
FIG. 10A is a flow diagram of a method for estimating contact pressure between a probe and a surface being inspected, according to some embodiments;
FIG. 10B is a flow diagram of a method for adjusting contact pressure between a probe and a surface being inspected, according to some embodiments;
FIG. 11 is a schematic diagram of a hyperbolic metamaterial layers that can be used in the probes described herein, according to some embodiments; and
FIG. 12 is a schematic diagram of a probe coupled to a rigidizable guide tube, according to some embodiments.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The systems and methods describe herein use tactile profilometry that is performed using a probe with a built-in profilometry sensor apparatus. The profilometry sensor apparatus includes a touch medium with elasticity that allows the touch medium to deform upon contact with a surface being inspected. The touch medium includes a first side that contacts the surface being inspected and a second side that is opposite the first side. The second side of the touch medium includes a reflective layer that is illuminated with one or more light sources. The profilometry sensor apparatus includes a deformable waveguide to direct light from the light sources to the reflective layer of the touch medium. One or more shaping actuators are operatively coupled to the deformable waveguide(s) to deform the deformable waveguide to provide adjustable and adaptive lighting control.

The probes used in the systems and methods described herein may include integral locomotion actuators for moving the probe along the surface being inspected. The probes provide locomotion to scan the surface using the profilometry sensor apparatus that is embedded in the probe. Optical data acquired by the profilometry sensor apparatus of the probe may serve a dual purpose for both profilometry output and to provide optical flow data that is used for probe localization and motion control.

The probes used in the systems and methods described herein may include a reversible adhesion mechanism for adjusting contact pressure between the touch medium and the surface being inspected. The probes may be configured to adjust the contact pressure, for example, based on optical data acquired by the profilometry sensor apparatus.

Profilometry may be useful in aviation applications, for example, to inspect engines, such as gas turbine engines, or engine components, such as turbine blades, blisks, shrouds, bearings, gears, etc. The systems and methods described herein can be used for on-wing inspection of engines (e.g., when the engines are installed on an aircraft).

Certain tactile profilometry techniques have shortcomings due to limited access, limited automation, or manual operation that make the techniques unsuitable for engine inspection or for inspection of other limited access locations. For example, stereo/structured light profilometers have limited automation and provide low repeatability and require significant skills to manipulate. Interferometry may provide good resolution or speed but have a fixed light beam angle and limited access due to the device configuration. Also, the costs of interferometry increase when multiple probes are employed to perform a scan. Certain tactile profilometers may use reflective surface to visualize and measure surface topography but require an operator to apply force to the surface being inspected and are not suitable for inspection locations where access is limited due to this manual operation and the handheld nature of the device. Finally, curing based profilometry techniques use a compound that creates replicas of three-dimensional surfaces. However, such curing-based techniques are manual and time consuming and also are not suitable for inspection locations where access is restricted.

The systems and methods described herein use a probe that can be miniaturized by providing adjustability for light beams, allowing the number of light sources to be reduced and providing flexibility on light source placement to miniaturize the probe. The systems and methods described herein also include self-locomotion and adjustable adhesion mechanisms to move and adjust contact pressure of the probe, respectively, to limit manual operation in inspection, allowing the systems and methods to be used in limited access inspection locations, such as the compressor, combustor, and/or turbine sections of an assembled gas turbine engine. For example, the probe may be inserted through a ports in the engine, such as for ignitors or fuel nozzles, or borescope inspection ports.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

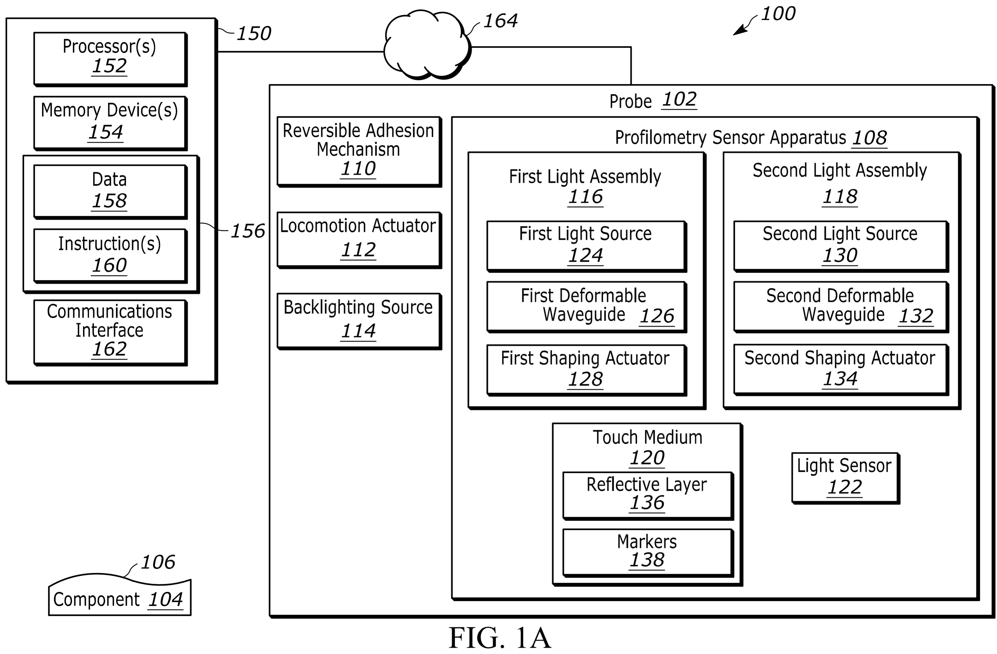

Referring now to the drawings, FIG. 1A shows a system 100 for performing tactile profilometry. The system 100 can be used for inspecting a component 104 and, in particular, a surface 106 of a component. In some examples, the component 104 is a component of an engine, such as a gas turbine engine. The system is configured to acquire profilometry data on the component 104. The profilometry data may include any data related to the surface 106 of the component 104 including but not limited to data on surface texture parameters (e.g., surface roughness), a surface profile (e.g., topography), and/or geometric features. In some examples, the profilometry data includes one or more of a surface roughness, texture, and height variations on the surface 106.

The system 100 includes a probe 102 and a controller 150. The probe 102 includes a profilometry sensor apparatus 108, a reversible adhesion mechanism 110, a locomotion actuator 112, and a backlighting source 114. In some embodiments, the probe 102 comprises a body that is stretchable (e.g., a stretchable body). For example, the body of the probe 102 may be made of a compliant or stretchable material. As used herein a stretchable material may refer to a material that is able to bend or deform about multiple axes. Suitable materials for forming the body of the probe 102 include but are not limited to thermoplastic polyurethanes (TPU), silicones such as polydimethylsiloxane (PDMS), and styrene-ethylene-butylene-styrene (SEBS). In some embodiments, the body of the probe 102 is made from a material (e.g., a silicone material) that is soft but resilient to enable the probe 102 to bend and flex while still maintaining structural integrity. In this manner, the probe 102 may be able bend or flex in various manners while locomoting (e.g., via the locomotion actuator 112), for example, to achieve a crawling motion. The body of the probe 102 has an inspection face that is disposed adjacent to the surface 106 of the component 104 during an inspection.

Portions of the body of the probe 102 can be made of an optically clear material, such as an optically clear silicone. Suitable optically clear silicone materials include but are not limited to silicone gels, phenyl gels (e.g., high refractive index phenyl gels) silicone elastomers, and silicone rubbers. Light can be transmitted and/or received through such optically clear sections of the probe 102 allow light to be transmitted and received therethrough, for example, to perform profilometry measurements using the light-based profilometry devices described herein.

The profilometry sensor apparatus 108, the reversible adhesion mechanism 110, the locomotion actuator 112, and/or the backlighting source 114 are coupled to the body of the probe 102. For example, the profilometry sensor apparatus 108, the reversible adhesion mechanism 110, the locomotion actuator 112, and/or the backlighting source 114 can be disposed within the body of the probe 102 or coupled to an outer surface of the probe 102. In some approaches, one or more of the sensor apparatus 108, the reversible adhesion mechanism 110, the locomotion actuator 112, and the backlighting source 114 are molded in the body of the probe 102. In other approaches, one or more of the sensor apparatus 108, the reversible adhesion mechanism 110, the locomotion actuator 112, and the backlighting source 114 are 3D printed and inserted into the body of the probe 102

The profilometry sensor apparatus 108 is configured to acquire the profilometry data. The sensor apparatus 108 may be a tactile or contact profilometer that physically touches the surface 106 of the component 104 to obtain the profilometry data. The profilometry sensor apparatus 108 is configured to contact the surface 106 of the component 104 that is being inspected using a touch medium 120 with a reflective layer 136 (e.g., a target surface to be illuminated). The geometry of the surface 106 causes deformation of the touch medium 120, which also results in deformation of the reflective layer 136. The profilometry sensor apparatus 108 is also configured to transmit beams of light to illuminate the reflective layer 136 and receive light reflected form the reflective layer 136 via a light sensor 122. The light sensor 122 may capture images of the reflective layer 136, for example, to detect deformations on the reflective layer 136 caused by the surface geometry. Optical data (e.g. images) of the reflective layer 136 are then used to generate profilometry data.

The profilometry sensor apparatus 108 includes a touch medium 120, a first light assembly 116, second light assembly 118, and a light sensor 122. On some embodiments, the profilometry sensor apparatus 108 can include a single light assembly. In other embodiments, the profilometry sensor apparatus 108 can include any suitable number of light assemblies and/or lights sources and, in some aspects, includes more than two light assemblies and/or light sources (e.g., 3, 4, 5, 6, 7, 8, etc.).

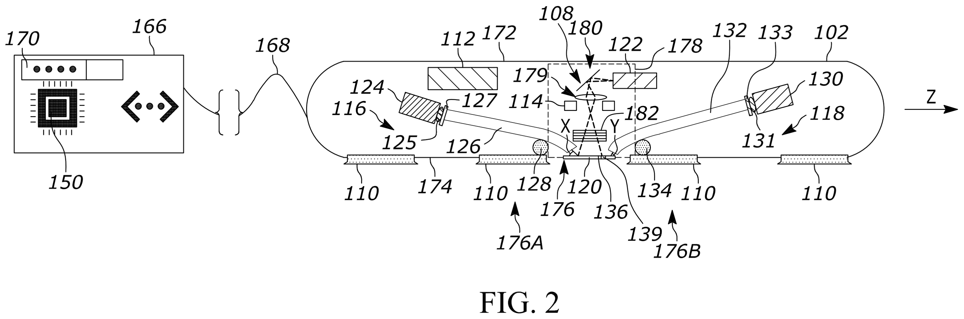

The touch medium 120 of the profilometry sensor apparatus 108 is configured to contact the surface 106 of the component 104. In some configurations, the touch medium 120 is disposed in a measurement window formed in the body of the probe 102 to be disposed adjacent to the component 104 for inspection. The measurement window may be an opening in the body of the probe 102 that is sized to receive the touch medium 120. FIG. 2 provides an example of how the touch medium 120 can be coupled to the probe 102. In some embodiments, the touch medium 120 is a compliant or conformable membrane. The touch medium 120 can be made of an elastomer. In some aspects, the touch medium 120 is made from a material that is transparent, semi-transparent, or translucent. The touch medium 120 may also comprise one or more opaque portions, to allow partial crossing of the light beam produced by the light sources. Suitable elastomers include but are not limited to thermoplastic elastomers (TPEs) and silicone. The touch medium 120 is suitably flexible or deformable to allow for deformation upon contact with the surface of the component being inspected.

Referring to FIG. 1A, the touch medium 120 includes a reflective layer 136 and a plurality of markers 138. The touch medium 120 has a first side and a second side that is disposed opposite the first side. The first side includes an outward facing surface that is configured to contact the surface 106 during an inspection. The touch medium 120 includes an elastic body that is transparent, semi-transparent, or translucent. The elastic body has sufficient deformability such that it deforms or distorts upon contact with geometries of the surface being inspected. The second side includes the reflective layer 136. The reflective layer 136 can be made from any suitable reflective materials or particles. In some examples, the reflective layer 136 is a silicone material embedded with fine reflective particles. In other examples, the reflective layer 136 is a sliver material that is sprayed onto the touch medium 120. The reflective layer 136 may be coated on the touch medium 120, for example, on the second side of the touch medium 120. The plurality of markers 138 are disposed in and/or on the reflective layer 136. The plurality of markers 138 can be particles that are disposed in and/or on the reflective layer 136. In some embodiments, the plurality of markers 138 are opaque particles that are printed on the reflective layer 136, for example using an oil-soluble paint such as a Kryon R primer. In some embodiments, the plurality of markers 138 are black. In some embodiments, the plurality of markers 138 form a pattern on the reflective layer 136. The plurality of markers 138 are small particles. The distribution of the markers 138 can be used to measure contact pressure on the touch medium 120, for example, by measuring disturbances and/or displacement in the markers.

The first light assembly 116 and the second light assembly 118 are configured to illuminate the touch medium 120 and, in particular, the reflective layer 136 of the touch medium 120. As used herein a waveguide may refer to a structure that is designed to direct the propagation of electromagnetic waves from one location to another. Waveguides may be comprised of a material or a combination of materials to confine and support the transmission of the electromagnetic waves along a predefined pathway, while minimizing or reducing loss and maintaining signal integrity. The waveguides used in the profilometry sensor apparatuses described herein have sufficient flexibility to enable one or more actuators to deform or move the waveguide into different positions or shapes. In one example, the deformable waveguides 126, 132 used herein are optical fibers. The optical fiber may be a slender, flexible strand or fiber that is designed to transmit light, including but not limited to ultraviolet (UV) radiation, visible light, and infrared (IR) radiation, along its length by the process of total internal reflection.

In some embodiments, the deformable waveguides 126, 132 include a core portion surrounded by a cladding portion. The core portion and the cladding portion may both made of transparent materials such as glass, silica, plastic or combinations thereof. The core portion typically has a higher refractive index (n) than the cladding portion to enable light to be guided across a broad spectrum of wavelengths. The core portion may have a refractive index (n₁) in the range of about 1.3 to about 1.5. In some aspects, the core portion is made from an optically clear silicone material. The optically clear silicone material can comprise at least one of poly(methyl methacrylate) (PMMA) or Polydimethylsiloxane (PDMS). The cladding portion may have a refractive index (n₂) in the range of about 0.9 to about 1.1.

It is contemplated that other types of waveguides may also be employed such as other dielectric waveguides, metallic waveguides, and optical or mirror-lined waveguides. A mirror-lined waveguide, for instance, includes a laser cavity in which mirrors of the cavity reflect light back and forth. For instance, the waveguide may include a chain of reflectors or mirrors. Mirror-lined waveguides can be designed to accommodate different wavelengths of light (e.g., infrared) by selecting appropriate reflective coatings that offer high reflectivity at the desired wavelengths. Any waveguide, however, should be designed with suitable flexibility to permit the deformability described herein.

The first light assembly 116 includes a first light source 124, a first deformable waveguide 126, and a first shaping actuator 128. The first light assembly 116 of the profilometry sensor apparatus 108 is configured to illuminate the reflective layer 136 of the touch medium 120 with a first light beam. The first light assembly 116 may be disposed adjacent to the touch medium 120.

The first light source 124 may be any suitable light source. The first light source 124 can be a single spectral light source that emits light at one specific wavelength or range of wavelengths or a multispectral light source that emits light at multiple wavelengths or ranges of wavelengths. In some embodiments, the first light source 124 is a light emitting diode (LED). In some implementations, a first lens 125 is associated with the first light source 124. The first lens 125 is disposed between the first light source 124 and the first deformable waveguide 126. The first lens 125 controls the behavior of light from the first light source 124. For example, the first lens 125 may control the convergence or divergence of the light to form a focused image and/or to magnify or reduce an image. Further, in some implementations, a first filter 127 is associated with the first light source 124. The first filter 127 is disposed between the first light source 124 and the first deformable waveguide 126. The first filter 127 can be a polarization filter to reduce or eliminate glare from shiny surfaces, an absorptive filter to absorb unwanted wavelengths of light, or an interference filter (e.g., a bandpass, longpass, shortpass, dichroic filter) to selectively transmit or select certain wavelengths of light. In some aspects, more than one of the aforementioned filter types can be used.

The first deformable waveguide 126 is coupled to the first light source 124. The first deformable waveguide 126 is configured to guide electromagnetic waves generated by the first light source 124 to the component 104. The first deformable waveguide 126 defines a first incidence angle between the first deformable waveguide 126 and the reflective layer 136. FIG. 2 illustrates the first incidence angle X, in accordance with some configurations. As shown, the first incidence angle X is the angle at which light exits the first deformable waveguide 126.

The first shaping actuator 128 is operatively coupled to the first deformable waveguide 126. The first shaping actuator 128 is configured to displace, translate and/or deform the first deformable waveguide 126 to adjust the first incidence angle. Adjusting the first incidence angle using the first shaping actuator 128 allows lighting from the first light source 124 to be placed at optimal angles without requiring special placement of the first light source 124. Flexibility in placement in the first light source 124 allows the probe 102 to be downsized or miniaturized for size constrained applications. In some aspects, the incidence angle (e.g., the first incidence angle X and/or the second incidence angle Y) of the light is adaptively controlled based on a target defect to be identified and the geometry of the surface 106. In some embodiments, the first shaping actuator 128 is at least one of a pneumatic actuator, a dielectric elastomer, or a tendon that pushes or pulls on the first deformable waveguide 126 to adjust the first incidence angle.

One or more of the first deformable waveguide 126 or the first shaping actuator 128 may be integrally molded or 3D printed on the body of the probe 102.

The second light assembly 118 includes a second light source 130, a second deformable waveguide 132, and a second shaping actuator 134. The second light source 130 may be any suitable light source. The second light source 130 can include but is not limited to light emitting diodes (LEDs), superluminescent diodes (SLDs), lasers and/or white light lamps. The second light assembly 118 of the profilometry sensor apparatus 108 is also configured to illuminate the reflective layer 136 of the touch medium 120. The second light assembly 118 may be disposed adjacent to the touch medium 120.

The second light source 130 can be a single spectral light source that emits light at one specific wavelength or range of wavelengths or a multispectral light source that emits light at multiple wavelengths or ranges of wavelengths. The second light source 130 can be the same type of light source as the first light source 124 or, in some aspects, can be a different type of light source. For example, in one embodiment, the second light source 130 may emit light at different wavelengths than the first light source 124. In some implementations, a second lens 131 is associated with the second light source 130. The second lens 131 is disposed between the second light source 130 and the second deformable waveguide 132. The second lens 131 controls the behavior of light from the second light source 130. For example, the second lens 131 may control the convergence or divergence of the light to form a focused image and/or to magnify or reduce an image. Further, in some implementations, a second filter 133 is associated with the second light source 130. The second filter 133 is disposed between the second light source 130 and the second deformable waveguide 132. The second filter 133 can be a polarization filter to reduce or eliminate glare from shiny surfaces, an absorptive filter to absorb unwanted wavelengths of light, or an interference filter (e.g., a bandpass, longpass, shortpass, dichroic filter) to selectively transmit or select certain wavelengths of light. In some aspects, more than one of the aforementioned filter types can be used.

The second deformable waveguide 132 is coupled to the second light source 130. The second deformable waveguide 132 is configured to guide electromagnetic waves generated by the second light source 130 to the component 104. The second deformable waveguide 132 defines a second incidence angle between the second deformable waveguide 132 and the reflective layer 136. FIG. 2 illustrates the first incidence angle Y, in accordance with some configurations. As shown, the second incidence angle Y is the angle at which light exits the second deformable waveguide 132.

The second shaping actuator 134 is operatively coupled to the second deformable waveguide 132. The second shaping actuator 134 is configured to displace, translate and/or deform the first deformable waveguide 132 to adjust the second incidence angle. Adjusting the second incidence angle using the second shaping actuator 134 allows lighting from the second light source 130 to be placed at optimal angles without requiring special placement of the second light source 130. Flexibility in placement in the second light source 130 allows the probe 102 to be downsized or miniaturized for size constrained applications. In some aspects, the incidence angle of the light is adaptively controlled based on a target defect to be identified and the geometry of the surface 106. In some embodiments, the second shaping actuator 134 is at least one of a pneumatic actuator, a dielectric elastomer, or a tendon that pushes or pulls on the second deformable waveguide 132 to adjust the second incidence angle.

One or more of the second deformable waveguide 132 or the second shaping actuator 134 may be integrally molded or 3D printed on the body of the probe 102.

The light sensor 122 of the profilometry sensor apparatus 108 is arranged to detect light from the first light source 124 and the second light source 130 that is reflected from the reflective layer 136 of the touch medium 120. The light sensor 122 may be any suitable light sensor, such as a charge coupled device (CCD) or complementary metal oxide semiconductor (CMOS) image sensor, for capturing images. In some embodiments, the light sensor 122 is a camera and, in some aspects, is a miniature camera. In some embodiments, the camera is a camera having at least one of a low resolution (e.g., a low pixel count) or a small field of view. The probe 102 may be able to compensate for use of a low resolution or small field of view by moving the probe 102 to acquire readings from different viewpoints and/or at different incidence angles.

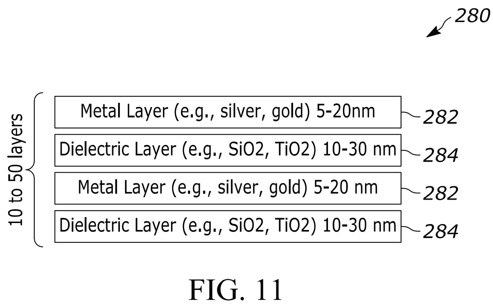

In some embodiments, the profilometry sensor apparatus 108 further includes one or more layers of the flexible hyperbolic metamaterials (HMMs) positioned between the light sensor 122 and the touch medium 120 to focus the light reflected from the reflective layer 136 of the touch medium 120 beyond a diffraction limit. FIG. 11 shows the configuration of layers of the flexible HMMs according to some embodiments.

Though, as illustrated, the profilometry sensor apparatus 108 includes the touch medium 120 has the reflective layer 136 it is contemplated that, in some embodiments, the reflective layer 136 can be omitted. In such a configuration, light travels through the body of the touch medium 120 to the surface 106 of the component 104 that is being inspected. So configured, the surface 106 of the component 104 acts as a target surface to be illuminated by the light sources. So configured, the light sensor 122 is configured to detect light reflected from the component 104 rather than from the reflective layer 136. In such an implementation, the controller 150 may be configured to assess shadows cast by features at different angles of the light. Further, when the reflective layer 136 is not used, the markers 138 can also be omitted and, Instead, shadows from features on the surface 106 of the component 104 can be used to determine the contact pressure.

When the plurality of markers 138 and/or the reflective layer 136 are omitted from the touch medium 120 shadows can be used to determine characteristics such as dimensions of features on the component 104 based on the shadows (e.g., patterns, characteristics, and/or changes in the shadows) on the surface of the touch medium 120 ad/or the reflective layer 136. In shadow profilometry the shadow cast by light from the light sources 124, 130 can be analyzed to measure surface topography of the component. The shape of the shadow (e.g., the boundary between light and dark areas) may reflect features on the surface of the component 104, such as the surface roughness or other features or parameters. In some approaches, the light sources 124, 130 are selectively activated to generate or adjust the shadows. For example, each light source 124, 130 could be activated one by one and images acquired sequentially. The incidence angles X, Y of the light sources 124, 130 can be adjusted to generate or adjust the shadows.

The reversible adhesion mechanism 110 is configured to adjust contact pressure that is applied by the touch medium 120 on the surface 106 of the component 104. In some configurations, the reversible adhesion mechanism is coupled to the stretchable body of the probe 102. The reversible adhesion mechanism 110 can include one or more of microfluidic channels, a pneumatic array, multiplexed dielectric elastomeric actuators, electroactive polymers, electroadhesive pad, a suction cup array, or vacuum suction to adjust the contact pressure. Such devices can be incorporated in the body of the probe 102. The reversible adhesion mechanism 110 can be adjusted, for example, to evenly distribute pressure across an inspection surface of the probe 102 that comes in contact with the surface 106 of the component 104.

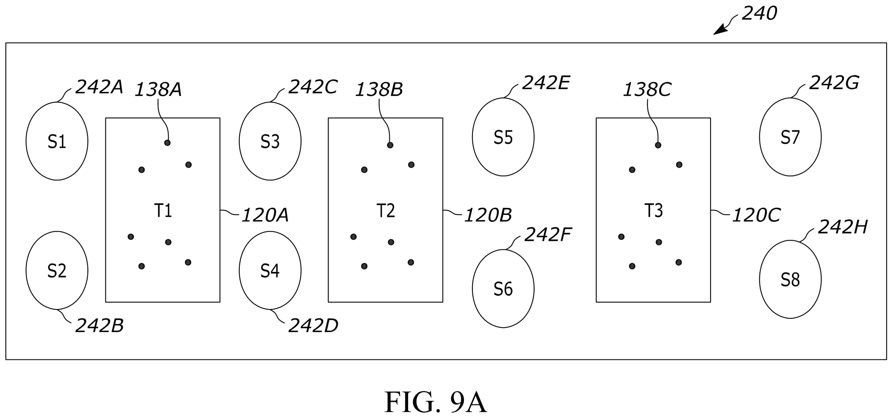

In some embodiments, the reversible adhesion mechanism 110 includes microfluidic channels disposed within the body of the probe 102. The microfluidic channels can be coupled to a fluid source with regulators for adjusting pressure of the fluid which, in turn, adjusts the contact pressure between the probe 102 and the surface 106 of the component 104. In some embodiments, the reversible adhesion mechanism 110 includes a pneumatic array comprising an array of small gas bladders positioned in the body of the probe 102. Controlling the pressure of the gas in the bladders controls the contact pressure. In some embodiments, the reversible adhesion mechanism 110 includes multiplexed dielectric elastomeric actuators that use elastomeric actuators that expand and contract to adjust the contact pressure. In some embodiments, the reversible adhesion mechanism 110 includes electroactive polymers can be applied to the body of the probe 102. The electroactive polymers change shape when electrically stimulated to maintain a desired contact pressure. In some embodiments, the reversible adhesion mechanism 110 uses electroadhesion to adjust the contact pressure. Electroadhesion uses an electroadhesive pad with conductive electrodes on a polymer substrate to generate electrostatic forces to adhere the inspection surface of the probe 102 to the surface 106 of the component 104. Alternating positive and negative charges on the electroadhesive pad creates an electric field that creates opposite charges on the surface the pad touches, causing an electrostatic attraction between the electrodes and the surface 106. In some embodiments, the reversible adhesion mechanism 110 includes a suction cup array. FIGS. 9A-9I illustrate one exemplary configuration of the reversible adhesion mechanism 110 where the reversible adhesion mechanism 110 includes an array of suction cups. In some embodiments, the reversible adhesion mechanism 110 uses vacuum suction to adjust the contact pressure. The probe 102 can include vacuum ports coupled to a vacuum pump to control suction forces to adjust the contact pressure.

The locomotion actuator 112 is configured to move the body of the probe 102 along the surface 106 of the component 104. In some configurations, the locomotion actuator 112 is coupled to the body of the probe 102. The locomotion actuator may include one or more of an inchworm actuator, a crawling actuator, or a remote push/pull actuator. In some embodiments, the inchworm actuator comprises a plurality of piezoelectric actuators to achieve gripping and releasing actions to generate linear motion of the stretchable body. In some embodiments, the crawling actuator comprises a plurality of pneumatic actuators to inflate air chambers in the stretchable body to bend the stretchable body and achieve a crawling motion. In some embodiments, the remote push/pull actuator comprises a linear actuator to generate movement of the stretchable body by alternating between pushing and pulling forces.

In one non-limiting embodiment, the locomotion actuator 112 comprises one or more adhesive devices in combination with one or more artificial muscle devices. The adhesive devices may selectively adhere the probe 102 to the surface of the component 104 while the artificial muscles may selectively expand, contract, and/or rotate to create complex motions. The adhesive devices can include, for example, suction cups or adhesive pads (e.g., electroadhesive pads) that adhere the probe 102 to the surface 106 of the component 104. The probe 102 can include two or a series of such adhesive devices along the body of the probe 102. The artificial muscles can be pneumatic artificial muscles, for example, in the form of one or more hydraulic or pneumatic bellows or cavities disposed in the body of the probe 102. The bellows or cavities can be pressurized and depressurized to generate motion in the probe. In one example configuration, the probe 102 may have an adhesive device at a front end portion and a back end portion of the probe with a plurality of pneumatic cavities formed in the probe between the back end portion and the front end portion. Locomotion can then be achieved via coordinated release and adhesive via the adhesive devices. In an example locomotion operation, the adhesive device at the front and back can be engaged and the pneumatic cavities pressurized. Releasing the adhesive device at the back and depressurizing the cavities could then cause the probe 102 to move forward.

In another embodiment, the locomotion actuator 112 can incorporate a shape memory alloy or a piezoelectric material that is able to deform when an electric field is applied to provide areas of expansion and contraction in the probe 102 to generate movement. It is contemplated that any mechanism that can change shape or cause the adhesive devices of the locomotion actuator 112 to move relative to one another can be employed in the locomotion actuator 112.

In some embodiments, the locomotion actuator 112 can include an actuator capable of micro-stepping the probe 102 across the surface 106 of the component 104. In this manner, the probe 102 can acquire several low resolution images that can be interlaced or stitched together to provide a high resolution image. Such micro-stepping locomotion actuators can be included in combination with any of the other locomotion actuators 112 described herein. In some configurations, the micro-stepping actuators can include directional adhesive columns that grip more strongly in one direction than another and walk or move in the direction in which they are less tightly gripped.

In some embodiments, the probe 102 includes the backlighting source 114. In some examples, the backlighting source 114 includes one or more of a ring light or an edge lit panels. In some examples, the backlighting source 114 includes a light source that is configured to illuminate the surface 106 from all or a plurality of directions. The backlighting source 114 can include multiple light sources and, in some aspects, includes a plurality of LEDs. The backlighting source 114 can be used to improve the uniformity of illumination of the component 104, to eliminate shadows, and/or to improve image quality, leading to more accurate and reliable profilometry data. The backlighting source 114 can be used to increase the intensity of the entire scene captured by the light sensor 122, for example, to illuminate areas that are too dull.

The controller 150 is operatively coupled to one or more components of the probe 102. It is contemplated that the components and assemblies of the probe 102, such as the profilometry sensor apparatus 108, the reversible adhesion mechanism 110, the locomotion actuator 112, and the backlighting source 114, can include one or more controllable devices and/or one or more devices that output data. Such devices can include but are not limited to light sources, sensors, actuators, motors, pumps, vacuum pumps, regulators, etc. The controller 150 can be used to control or operate such devices. The controller 150 can also be configured to receive data from such devices.

The controller 150 may be operatively coupled to one or more components of the profilometry sensor apparatus 108. In some configurations, the controller 150 is in communication with one or more components of the first light assembly 116, such as the first light source 124 and the first shaping actuator 128. The controller 150 may be in operative communication with the first light source 124 and configured to control one or more operating parameters of the first light source 124, such as intensity (brightness), color, polarization, and/or distribution (beam pattern). In one example, the controller 150 can be configured to adjust the first light source 124 to emit light a shorter wavelength to improve image resolution. In another example, the controller 150 can be configured to adjust the polarization of light from the first light source 124 via the first filter 127. In some configurations, the control circuit is also in operative communication with the first shaping actuator 128 and configured to control one or more operating parameters of the first shaping actuator 128.

Similarly, in some configurations, the controller 150 is in communication with one or more components of the second light assembly 118, such as the second light source 130 and the second shaping actuator 134. The controller 150 may be in operative communication with the second light source 130 and configured to control one or more operating parameters of the second light source 130, such as intensity (brightness), color, polarization, and/or distribution (beam pattern). In one example, the controller 150 can be configured to adjust the second light source 130 to emit light a shorter wavelength to improve image resolution. In another example, the controller 150 can be configured to adjust the polarization of light from the second light source 130 via the second filter 133. In some configurations, the control circuit is also in operative communication with the second shaping actuator 134 and configured to control one or more operating parameters of the second shaping actuator 134.

Further, the controller 150 can also receive data from one or more components of the profilometry sensor apparatus 108. The controller 150 may receive data from one or more of the first light assembly 116 (e.g., from the first light source 124 and/or the first shaping actuator 128) and the second light assembly 118 (e.g., from the second light source 130 and/or the second shaping actuator 134). In addition, the controller 150 can receive optical data from the light sensor 122 of the profilometry sensor apparatus 108. The controller 150 may be configured to control one or more of the first light assembly 116 (e.g., from the first light source 124 and/or the first shaping actuator 128) and the second light assembly 118 (e.g., from the second light source 130 and/or the second shaping actuator 134) based on the optical data. In some configurations, the controller 150 can adjust the incidence angle between the first light beam and/or the second light beam and the reflective layer 136 of the touch medium 120 based on the optical data received from the profilometry sensor apparatus 108.

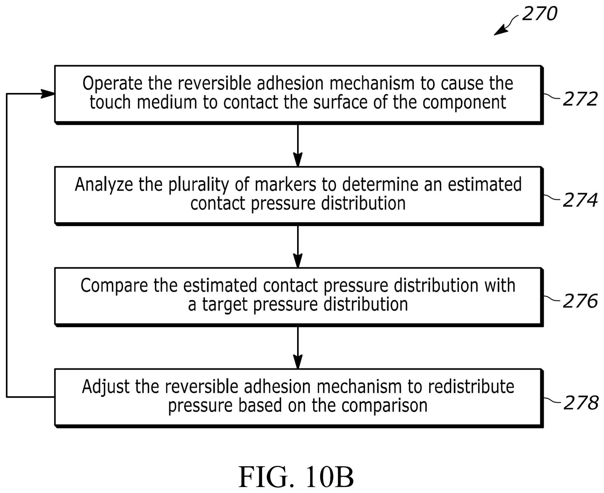

In some embodiments, the controller 150 is also operatively coupled to the reversible adhesion mechanism 110 of the probe 102. So configured, the controller(s) 150 can receive data from and/or control operating parameters of the reversible adhesion mechanism 110. In some embodiments, the optical data is indicative of a distribution of the plurality of markers. FIG. 10B illustrates an exemplary approach for controlling contact pressure using the reversible adhesion mechanism 110.

In some embodiments, the controller 150 is also operatively coupled to the locomotion actuator 112 of the probe 102. For example, the controller 150 may be operatively coupled with the locomotion actuator 112 and, for example, may be configured to control one or more operating parameters of the locomotion actuator 112. In some configurations, the controller 150 is configured to control a position of the probe 102 using the locomotion actuator 112 based on the optical data.

In some embodiments, the controller 150 is configured to operate the locomotion actuator 112 to move the body of the probe 102 along the surface 106 of the component 104 to position the body at a plurality of inspection locations. The controller 150 may operate the profilometry sensor apparatus 108 to illuminate the reflective layer 136 and acquire optical data via the light sensor 122 at the plurality of inspection locations. In some aspects, the controller 150 is further configured to stitch together the optical data acquired from the plurality of inspection locations to generate a composite view (e.g., a panoramic view) of the surface 106 of the component 104. The controller 150 may continuously stitch together the optical data as the locomotion actuator 112 moves the probe 102.

In some embodiments, the controller 150 is operatively coupled to the backlighting source 114. The controller 150 may be configured to adjust the backlighting source 114 based on the optical data acquired using the profilometry sensor apparatus 108. For example, the controller 150 may be configured to adjust an intensity and/or an illumination level of the backlighting source 114, for example, if an intensity of an image is too faint or if the signal to noise ratio is too low. In this manner, the probe 102 may be able to implement adaptive lighting control to achieve improved lighting conditions for various inspection applications.

The controller 150 may include one or more processor(s) 152 and one or more memory device(s) 154. The one or more processor(s) 152 may include any suitable processing device, such as a microprocessor, microcontroller, integrated circuit, logic device, or other suitable processing device. The one or more memory device(s) 154 may include one or more computer-readable media, including, but not limited to, non-transitory computer-readable media, random access memory (RAM), read only memory (ROM), hard drives, flash drives, or other memory devices.

The one or more memory device(s) 154 may store information accessible by the one or more processor(s) 152, including computer-readable instructions 160 that can be executed by the one or more processor(s) 152. The instructions 160 can be any set of instructions that when executed by the one or more processor(s) 152, cause the one or more processor(s) 152 to perform operations. The instructions 160 may be software written in any suitable programming language or can be implemented in hardware. In some embodiments, the instructions 160 may be executed by the one or more processor(s) 152 to cause the one or more processor(s) to perform operations, such as the cleaning operations of a gas turbine engine, as described herein, and/or any other operations or functions of the controller. Additionally, and/or alternatively, the instructions 160 may be executed in logically and/or virtually separate threads on the processor(s) 152. The memory device(s) 154 can further store data 158 that can be accessed by the processor(s) 152.

The controller 150 can also include a communications interface 162 used to communicate, for example, with the components of the system 100. The communications interface 162 may include any suitable components for interfacing with one more communications network(s), including for example, transmitters, receivers, ports, controllers, antennas, or other suitable components. The controller 150 may also be communication (e.g., via the communications interface 162) with the various components or devices of the system 100 described above and may selectively operate such components or devices in response to user input and feedback from these components. More specifically, for the embodiment depicted, the controller 150 can be configured to communicate through a communication network 164 through communications interface 162, such that the controller 150 may send or receive information and/or commands to or from the various components of the system 100 wirelessly. It should be appreciated, however, that in other embodiments, the controller 150 may additionally, or alternatively, use a wired communication bus to communicate with various components or devices of the system 100.

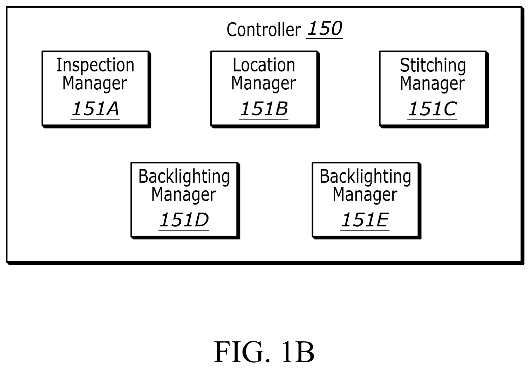

FIG. 1B shows components of the controller 150 of FIG. 1A, according to some embodiments. The components may be implemented, for example, via the processor 152 executing instructions from the memory device(s) 154. Alternatively, some or all of the components of controller 150 may be implemented via hard-wired circuitry. For example, components of controller 150 may correspond to an ASIC, FPGA, and/or another type of integrated circuit. As shown in FIG. 1B, the controller 150 can include one or more of an inspection manager 151A, a location manager 151B, a stitching manager 151C, an adhesion manager 151D, and a backlighting manager 151E. The controller 150 may be configured to perform one or more of the functions described as being carried out by these components.

The inspection manager 151A may manage operation of the profilometry sensor apparatus 108, for example, to acquire optical data (e.g., images) for an inspection of the component 104. The inspection manager 151A can adjust components of the first light assembly 116 and/or the second light assembly 118 of the profilometry sensor apparatus 108 based on the optical data. For example, the inspection manager 151A may adjust the incidence angles of light from the first light source 124 and the second light sources 130 by adjusting the first deformable waveguide 126 and the second deformable waveguide 132, respectively. The inspection manager 151A can also adjust the incidence angles of light from the first light source 124 and the second light source 130 to ensure certain metrics are within a predetermined threshold, for example, to ensure the images have adequate shadow detail, exposure, feature contrast, and/or capture an entirety of a feature such as a defect on the surface 106.

In some approaches, the inspection manager 151A can detect one or more defects, features, or characteristics of the surface of the component 104 based on the optical data acquired from the profilometry sensor apparatus 108.

The location manager 151B may manage the location or position of the probe 102 on the component 104. The location manager 151B can operate the locomotion actuator 112 of the probe 102 and, in some aspects, the reversible adhesion mechanism 110 to move the probe to one or more inspection locations on the surface 106 of the component 104. In some embodiments, the location manager 151B moves the probe 102 to capture a feature on the surface 106 of the component 104 from more than one viewpoint. In some embodiments, the location manager 151B may move the probe 102 to an inspection location based on the optical data acquired by the profilometry sensor apparatus. For example, the location manager 151B can move the probe 102 to acquire additional images at or near an area of interest, for example, upon detecting a feature such as a defect on the surface 106 of the component 104.

The stitching manager 151C manages the stitching of optical data (e.g., images) together to create a composite image. In some examples, the composite image is a panoramic image of the surface 106 of the component 104. The stitching manager 151C may stitch optical data together in real time as the probe 102 moves across the surface 106 of the component 104. The stitching manager 151C uses features of the optical data from the profilometry sensor apparatus 108 (e.g., features on images) to perform the stitching. The stitching manager may stitch together the optical data acquired from a plurality of inspection locations to generate a composite view (e.g., a panoramic view) of the surface 106 of the component 104. In some embodiments, the stitching manager 151C may also determine one or more gaps in the composite view and identify one or more inspection locations based on the one or more gaps. The stitching manager 151C may work in conjunction with the location manager 151B to move the probe to the additional inspection locations to acquire additional optical data (e.g., images) at those locations.

The adhesion manager 151D manages the contact pressure between the probe 102 and the profilometry sensor apparatus 108. The adhesion manager 151D can operate the reversible adhesion mechanism 110 to adjust the contact pressure and, in some aspects, achieve a uniform contact pressure. The adhesion manager 151D can manage the contact pressure based on the optical data from the profilometry sensor apparatus 108. For example, the optical data may include images of markers 138 on the touch medium 120. Disturbances or displacement of the markers 138 in the images may be indicative of the contact pressure distribution on the touch medium. Further, in some aspects, the adhesion manager 151D can manage contact pressure based on shadows in the images. In some embodiments, the adhesion manager 151D determines a strain in the touch medium 120 (e.g., in the elastomer) based on a distribution of the plurality of markers 138 and actively controls the reversible adhesion mechanism 110 based on the strain in the touch medium 120.

The backlighting manager 151E manages the backlighting on the target surface to ensure an adequate level of illumination of the target surface (e.g., the reflective layer 136 or the surface 106 of the component 104). The backlighting manager 151E may adjust the backlighting source 114, for example, to adjust its intensity and achieve an improved or optimal level of backlighting. The backlighting manager 151E can control the backlighting source 114 based on the optical data acquired via the profilometry sensor apparatus 108.

FIG. 2 shows the probe 102 of FIG. 1A, according to an exemplary embodiment. The probe 102 includes the profilometry sensor apparatus 108, the reversible adhesion mechanism 110, and the locomotion actuator 112. The probe 102 is coupled to a controller housing 166 which includes the controller 150. As illustrated, the probe 102 is coupled to the controller housing 166 via a cable 168. However, in some embodiments, the probe 102 may be untethered to the controller housing 166 and in communication with the controller 150 via a wireless network.

The controller housing 166 includes a user interface 170. The user interface 170 can include a variety of user inputs that are configured for controlling the operation of the probe 102. In some examples, the user interface 170 includes one or more buttons, control knobs, and/or touch pads. The user interface 170 can also include one or more graphical displays configured to provide operational feedback or other information to a user of the probe 102. In operation, the probe 102 can be inserted into an engine (e.g., a gas turbine engine) via an inspection port. The probe 102 can be operated from outside of the engine using the user interface 170.

In the exemplary embodiment, the probe 102 includes a stretchable body 172. The profilometry sensor apparatus 108 and the locomotion actuator 112 are disposed within the stretchable body 172. It is contemplated that the locomotion actuator 112 in this configuration can be one or more bellows or inflatable cavities in the stretchable body 172 that are selectively pressurized. The reversible adhesion mechanisms 110 can function as the adhesion devices that are operated in conjunction with the locomotion actuator 112, for example, to selectively grip and release portions of the probe 102 as the cavities are inflated to move the probe 102.

The stretchable body 172 includes an inspection surface 174 that contacts the surface 106 of the component 104 (not shown in FIG. 2) for an inspection. The inspection surface 174 of the stretchable body 172 includes one or more measurement windows 176 that receives the touch medium 120 of the profilometry sensor apparatus 108. In the illustrated embodiment, the measurement window 176 is disposed in the optically clear section 178 of the stretchable body 172. The reversible adhesion mechanism 110 is coupled to the inspection surface 174. As illustrated, the reversible adhesion mechanism 110 is positioned directly adjacent to the one or more measurement windows 176 on the inspection surface 174, though, the reversible adhesion mechanism 110 may be positioned in any suitable manner. In some configurations, an entirety of the stretchable body 172 is optically clear. In other configurations, a portion of the stretchable body 172 is optically clear and another portion of the stretchable body 172 is opaque. In FIG. 2, the stretchable body 172 includes an optically clear section 178 dispose in a central portion of the stretchable body 172 with opaque portions on either side of the optically clear section 178. The optically clear section 178 includes the measurement window 176. The profilometry sensor apparatus 108 is disposed in the optically clear section 178 to permit the transmission and receiving of light by the profilometry sensor apparatus 108.

In the stretchable body 172, the first light assembly 116 is disposed on a first side 176A (e.g., adjacent to a first side edge) of the measurement window 176 and the second light assembly 118 is disposed on a second side 176B (e.g., adjacent to a second side edge) of the measurement window 176. The first deformable waveguide 126 forms a first incidence angle X relative to the reflective layer 136 of the touch medium 120. The second deformable waveguide 132 forms a second incidence angle Y relative to the reflective layer 136 of the touch medium 120.

The first light assembly 116 and the second light assembly 118 can be arranged in any suitable manner in the probe 102, for example, to reduce or minimize the size of the probe 102. Because the profilometry sensor apparatus 108 includes the first deformable waveguide 126 and the first shaping actuator 128 for adjusting the first incidence angle X and the second deformable waveguide 132 and the second shaping actuator 134 for adjusting the second incidence angle Y, there is flexibility in where the first light source 124 and the second light source 130 can be positioned. That is, the first light source 124 and the second light source 130 need not be positioned in a particular location to achieve a particular incidence angle since the light beams generated by the light sources can be manipulated and redirected using the adjustable flexible waveguides. Because the light beams can be manipulated and redirected using the flexible waveguides, the light sources 124, 130 can be disposed in a fixed position in the probe 102 yet the light sources 124, 130 can still be adjusted to adapt to a variety of surfaces and improve or optimize the incidence angles without moving the light sources 124. 130.

The light sensor 122 is disposed in the optically clear section 178 opposite the touch medium 120. In the embodiment of FIG. 2, a lens 179 (e.g., an autofocus lens) and a mirror 180 are positioned between the touch medium 120 and the light sensor 122 for guiding light reflected from the reflective layer 136 of the touch medium 120 to the light sensor 122. One or more HMM layers 182 are also positioned between the touch medium 120 and the light sensor 122. The one or more HMM layers 182 are disposed between the lens 179 and the touch medium 120.

The backlighting source 114 is positioned between the touch medium 120 to illuminate the reflective layer 136 of the touch medium 120 and provide backlighting to improve image quality. In the illustrated embodiment, the backlighting source 114 is a ring light.

In some embodiments, the probe 102 can further include a calibration target 139. The calibration target 139 provides a surface with a known, fixed shape that provides a ground truth measurement to define what constitutes a "flat" surface. The calibration target 139 may be formed from a relatively rigid material that is embedded in the stretchable body 172 of the probe 102. Because the calibration target 139 is formed from a rigid material, it does not deform, for example, when the probe 102 is pushed into contact with the surface 106 of the component 104. In the illustrated configuration, the calibration target is disposed close to the touch medium 120 and in the same plane as the touch medium 120. The calibration target 139 is disposed in the cone of light from the light sources.

In operation, the touch medium 120 is placed in contact with the surface 106 of the component 104 (not shown in FIG. 2). The controller 150 may be configured to operate the reversible adhesion mechanism 110 to place the touch medium 120 in contact with the surface 106. The surface 106 of the component 104 deforms the touch medium 120 and results in deformations in the reflective layer 136. For example, features on the profile of the surface 106 of the component 104 cause deformations in the reflective layer 136 of the touch medium 120.

The controller 150 operates the first light assembly 116 and the second light assembly 118 to illuminate the reflective layer 136 of the touch medium 120. When the touch medium 120 contacts the surface 106, the touch medium 120 distorts according to the geometry of the surface 106 and this distortion is indicated by a change in reflection from the reflective layer 136. The light sensor 122 captures images of the reflective layer 136 as optical data. The three-dimensional (3D) structure of the surface 106 is reconstructed from the images captured by the light sensor 122. The optical data is transmitted from the light sensor 122 to the controller 150.

The controller 150 may then use the optical data from the light sensor 122 to provide feedback control to one or more of the first light assembly 116 and the second light assembly 118. For example, the controller 150 can adjust the first incidence angle X of the beam of light created by the first light source 124 by displacing the reflective layer 136 using the first shaping actuator 128. The controller 150 can also adjust the second incidence angle Y of the beam of light created by the second light source 130 by displacing the second deformable waveguide 132 using the second shaping actuator 134.

The controller 150 can also use the optical data from the light sensor 122 to adjust the reversible adhesion mechanism 110 to refine the contact pressure between the surface 106 and the touch medium 120.

In some embodiments, the controller 150 is configured to cause the first shaping actuator 128 to adjust the first incidence angle X by moving the first deformable waveguide 126 to achieve a plurality of different first incidence angles and acquire optical data at the plurality of different first incidence angles X. Similarly, in some configurations, the controller 150 is configured to cause the second shaping actuator 134 to adjust the second incidence angle Y by moving the second deformable waveguide 132 to achieve a plurality of different second incidence angles and acquire optical data at the plurality of different first incidence angles Y.

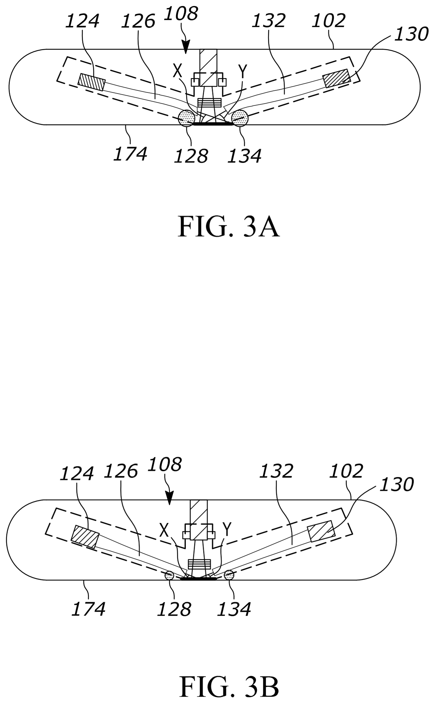

FIGS. 3A and 3B shows the incidence angles X, Y in the profilometry sensor apparatus 108 of the probe 102 at different settings. In some embodiments, the incidence angles X, Y are adjusted within the range of about 10 degrees to about 60 degrees using the adjustable waveguides 126, 132.

In FIG. 3A, the first incidence angle X and the second incidence angle Y are set to a high incidence angle (e.g., between about 10 degrees and about 45 degrees). The first shaping actuator 128 and the second shaping actuator 134 are activated (e.g., on). In the illustrated embodiment, the first shaping actuator 128 and the second shaping actuator 134 are inflatable chambers. The inflatable chambers of the first shaping actuator 128 and the second shaping actuator 134 are inflated to increase the chamber diameter. The first shaping actuator 128 is pushing at least a portion of the first deformable waveguide 126 away from the inspection surface 174, thereby increasing the first incidence angle X. The second shaping actuator 134 is pushing at least a portion of the second deformable waveguide 132 away from the inspection surface 174, thereby increasing the second incidence angle Y.

In FIG. 3B, the first incidence angle X and the second incidence angle Y are set to a default or low incidence angle (e.g., between about 45 degrees and about 60 degrees). The first shaping actuator 128 and the second shaping actuator 134 are deactivated (e.g., off). For example, the inflatable chambers of the first shaping actuator 128 and the second shaping actuator 134 are deflated to decrease the chamber diameter. The first shaping actuator 128 is retracted away from at least a portion of the first deformable waveguide 126, moving the first deformable waveguide 126 closer to the inspection surface 174, thereby decreasing the first incidence angle X. The second shaping actuator 134 is retracted away from at least a portion of the second deformable waveguide 132, moving the second deformable waveguide 132 towards the inspection surface 174, thereby decreasing the second incidence angle Y.

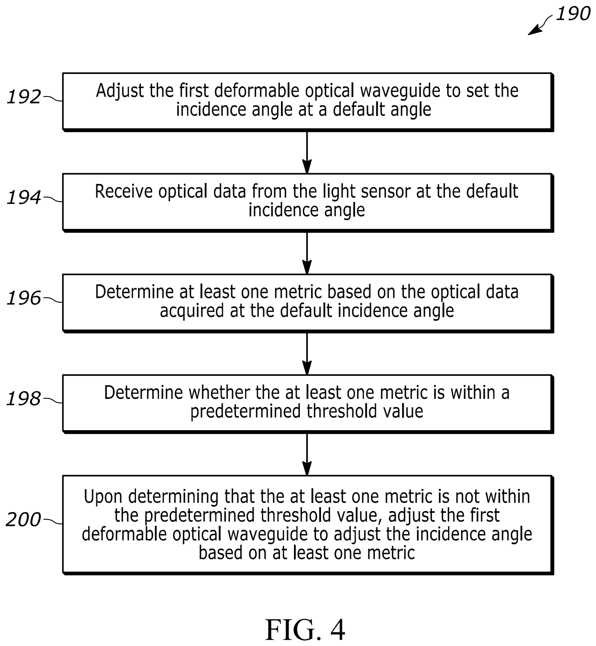

FIG. 4 shows a method 190 for adjusting the incidence angles of light in the profilometry sensor apparatus 108, according to some embodiments. The method is described with reference to the first incidence angle X, but it is contemplated that the second incidence angle Y can be adjusted in the same manner. In some approaches, the first incidence angle X is adjusted with the second incidence angle Y, for example, to achieve the same angle. In other approaches, the first incidence angle X is adjusted independently from the second incidence angle Y. The method 190 or portions thereof can be implemented using the controller 150 shown and described with reference to FIGS. 1A and 1B. Although the following description of the method of manufacturing is described in a particular order, which represents a particular embodiment, it should be noted that the method of manufacturing may be performed in any suitable order. Further, certain steps may be repeated or skipped altogether, and additional steps may be included.

At 192, the controller 150 causes the first shaping actuator 128 to adjust the first deformable waveguide 126 to set the first incidence angle X at a default angle. In some approaches, the default angle is a low incidence angle such as the incidence angle illustrated in FIG. 3B.

At 194, the controller 150 receives optical data from the light sensor 122 at the default incidence angle. For example, the controller 150 activates the first light source 124 to illuminate the reflective layer 136 of the touch medium 120 with light at the default angle. The light reflected from the reflective layer 136 is detected by the light sensor 122 and the light sensor 122 transmits optical data indicative of the reflected light to the controller 150.

At 196, the controller 150 determines at least one metric based on the optical data acquired at the default incidence angle. In some embodiments, the at least one metric includes one or more of a defect edge sharpness, a contrast ratio, or a defect visibility.

At 198, the controller 150 determines whether the at least one metric is within a predetermined threshold value. For example, the controller 150 compares the at least one metric to the predetermined threshold value for the defect edge sharpness, the contrast ratio, or the defect visibility to determine whether to adjust the default incidence angle to improve one or more of the metrics to improve image quality.

At 200, upon determining the at least one metric is not within the predetermine threshold value, the controller 150 causes the first shaping actuator 128 to adjust the first incidence angle X based on the at least one metric. In one example, the controller 150 is configured to increase the first incidence angle X via the first deformable waveguide 126 upon determining that the at least one metric indicates that there is inadequate shadow detail. In another example, the controller 150 is configured to cause the first shaping actuator 128 to adjust the first incidence angle X upon determining that the at least one metric indicates overexposure, insufficient feature contrast, and/or large defects.

In some embodiments, blocks 192 to 200 can be repeated until the at least one metric stabilizes within the predefined thresholds.

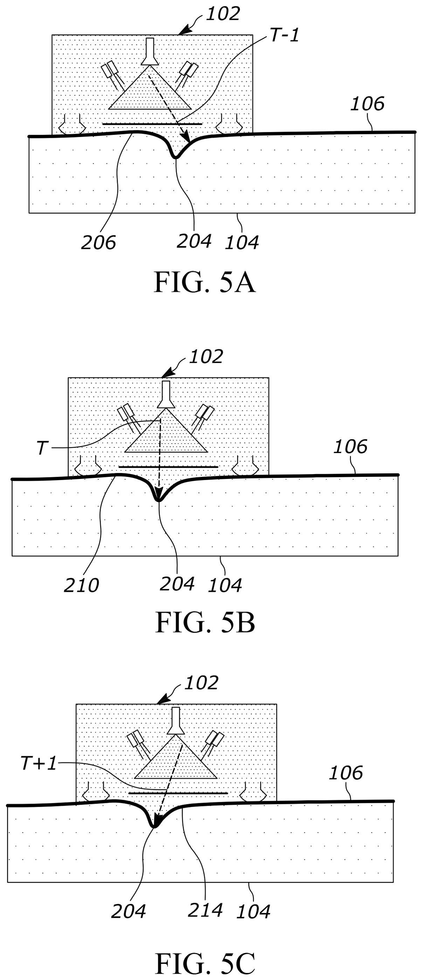

FIGS. 5A, 5B, and 5C illustrates the probe 102 collecting optical data from multiple viewpoints. For example, the locomotion actuator 112 can move the probe 102 along the surface 106 of the component 104 so that the probe 102 can capture optical data at multiple viewpoints. Acquiring optical data from multiple viewpoints may help to properly reconstruct a surface normal of a feature on the surface of the component. For example, viewing the same feature from multiple viewpoints may help to compensate for the use of fewer light sources in the probe 102 and/or for use of a low-resolution camera as the light sensor 122. For example, optical data can be aggregated from multiple viewpoints to enhance the robustness and accuracy of surface normal estimate.

In FIG. 5A, the probe 102 is positioned at a first position 206 on the surface 106 of the component 104 to acquire optical data from a first viewpoint T-1. The surface 106 of the component 104 has a feature 204. In some examples, the feature 204 is a defect such as a crack, scratch, nick, dent, pitting, area of corrosion, etc. In some examples, the feature 204 is an attribute of the component 104 such as a ridge, tip, edge, other geometric/shape attribute. The first position 206 is on a first side of the feature 204.

In FIG. 5B, the probe 102 is positioned at a second position 210 on the surface 106 of the component 104 to acquire optical data from a second viewpoint T. The second position 210 is located directly above or in line with the feature 204.

In FIG. 5C, the probe 102 is positioned at a third position 214 on the surface 106 of the component 104 to acquire optical data from a third viewpoint T+1. The second position 214 is located on a second side of the feature 204.

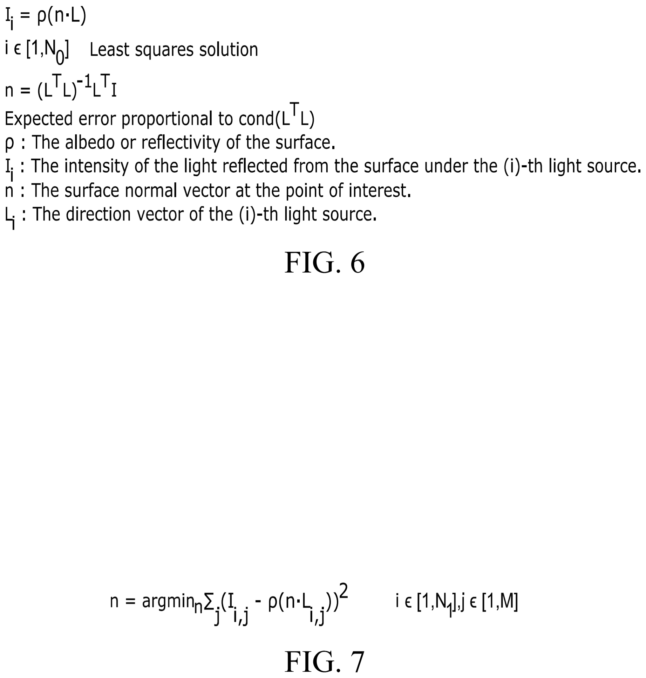

In some embodiments, both the position of the probe 102 on the surface 106 of the component 104 and the incidence angle are adjusted to scan an area of the surface 106 from multiple angles and positions. As described further below, use of multiple incidence angles and viewpoints can aid in estimating surface normals. Surface normals provide information about the orientation of the surface 106 of the component 104, which assists with the interpretation of the optical data and for 3D reconstruction of the surface 106 and defect recognition. Acquiring images from multiple viewpoints and, in some aspects, multiple incidences as opposed to using a single viewpoint may help to reduce error in calculating surface normal and provide a more robust and accurate measurement of surface normal. FIG. 6 illustrates an exemplary approach for calculating surface normals using light sources with different incidence angles. FIG. 7 illustrates an exemplary approach for calculating surface normal using light sources to capture images from different viewpoints. In both FIG. 6 and FIG. 7, the equations are solved by setting up a least squares matrix. The condition number of the matrix is greatly reduced by having more independent equations (e.g., for the multiple incidence angles and/or viewpoints), leading to better accuracy in estimating surface normals. In FIG. 7, M represents the number of different incidence angles and N represents the number of different viewpoints.

FIG. 6 provides exemplary equations for estimating surface normal vectors (n) using a light source at different incidence angles, for example, as is illustrated in FIGS. 3A-3B. The surface normal vectors (n) are determined based on the intensity of light reflected from the reflective layer 136 of the touch medium 120 (*Iᵢ*) under an (i)-th light source and the direction vector of the (i)-th light source. The surface normal is estimated using a least squares matrix. The condition number of the least squares matric can be greatly reduced by having more independent equations representing multiple incidence angles.

FIG. 7 provides exemplary equations for estimating surface normal vectors (n) using a probe positioned at different positions relative to a feature to provide different viewpoints, for example, as is illustrated in FIGS. 5A-5C. The surface normal vectors (n) are estimated using a least squares matrix.

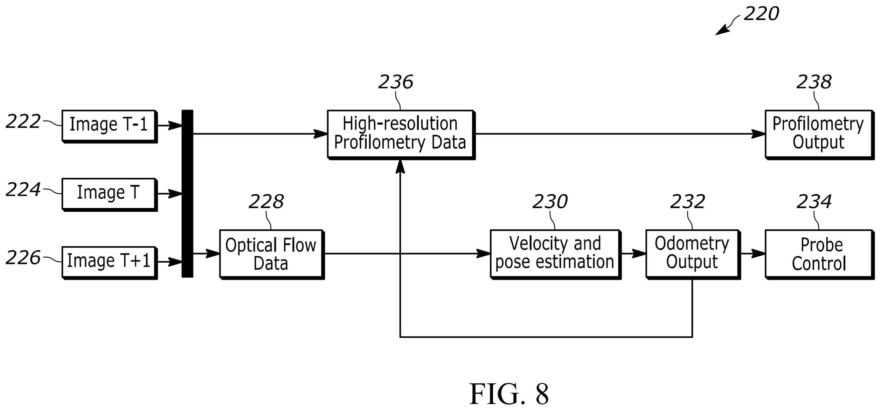

FIG. 8 shows a method 220 for acquiring optical data (e.g., images) of a feature from multiple viewpoints for both acquiring profilometry and probe control. In the method 220, the optical data is used for high resolution surface profiling and measuring the velocity and displacement of the probe 102. The dual use of optical data reduces the need for additional sensors, such as inertial measurement units (IMUs), in the probe which helps to make the probe 102 more compact and miniaturized.

The method 220 uses images taken from different viewpoints: a first image 222 taken a first viewpoint (e.g., the first viewpoint T-1 shown in FIG. 5A); a second image 224 taken at a second viewpoint (e.g., the second viewpoint T shown in FIG. 5B); a third image 226 (e.g., the third viewpoint T+1 shown in FIG. 5C).

The images 222, 224, 226 are used for profilometry. The images 222, 224, 226 acquired from multiple viewpoints provide high resolution profilometry data 236 for a profilometry output 238. The profilometry output 238 may include profilometry data such as a surface profile, surface roughness, or height variations for a surface being inspected.

The images 222, 224, 226 are also used for optical flow data 228 to represent the motion of the probe 102. The optical flow data 228 is used to estimate the velocity and pose of the probe 102 for an odometry output 232. The odometry output 232 can include odometry data such as the velocity and displacement of the probe 102. The odometry output 232 is used for probe control 234. Utilizing the light sensor 122 to capture images of the surface beneath it, allows for movement of the probe 102 to be calculated (e.g., by the controller 150) based on the changes in the image patterns captured by the light sensor 122. The optical flow data 228 may track features on a surface (e.g., the surface 106), such as discolorations, particles, dust, deposits, cracks, contaminants, etc., to determine how far and in which direction the probe has moved across the surface. Using the images 222, 224, 226 from the light sensor 122, it is possible to track the position of the probe 102 through an environment, for example, during an inspection. The odometry output 232 can be used (e.g., by the controller 150) to navigate the probe 102 through its environment. The odometry output 232 can also be used to improve the resolution of the profilometry data. For example, the odometry output 232 can provide precise data on the location of the probe 102 so that the profilometry data can be continuously stitched together as the probe 102 moves along the surface 106 of the component 104. Continuous stitching with the use of precise data on the location of profilometry data may enable high-resolution inspection over large areas of the surface 106.

FIG. 9A illustrates a reversible adhesion mechanism 240 that can be used, for example, on the inspection surface of a probe. In some embodiments, the reversible adhesion mechanism 240 can be incorporated on the inspection surface 174 of the probe 102 described herein, according to some embodiments. The reversible adhesion mechanism 240 can be used as the reversible adhesion mechanism 110 in the probe 102 of FIGS. 1A and 2. In the illustrated configuration, the probe includes a first touch medium 120A, a second touch medium 120B, and a third touch medium 120C. The reversible adhesion mechanism 110 includes a plurality of suction cups (e.g., an array of suction cups). The first touch medium 120A, the second touch medium 120B, and the third touch medium 120C act as tactile sensors to provide feedback on the contact pressure for actuation of the plurality of suction cups.

In the illustrated embodiment, the plurality of suction cups includes a first suction cup 242A, a second suction cup 242B, a third suction cup 242C, a fourth suction cup 242D, a fifth suction cup 242E, a sixth suction cup 242F, a seventh suction cup 242G, and an eighth suction cup 242H. Though, any suitable number and arrangement of suction cups can be used. The plurality of suction cups are coupled to a mechanism that allows adjustment of the suction force, for example, using a valve system (not shown in FIG. 9A) that controls a level of vacuum beneath the suction cup, thereby adjusting the suction force. The plurality of suction cups are positioned around the touch mediums 120A, 120B, 120C of the probe.

The first suction cup 242A, the second suction cup 242B, the third suction cup 242C, and the fourth suction cup 242D are positioned around the periphery of first touch medium 120A. As illustrated, the suction cups 242A, 242B, 242C, 242D are positioned adjacent to the corners of the first touch medium 120A, though any suitable configuration can be used. The first touch medium 120A includes a plurality of markers 138A that are used to estimate the contact pressure between the first touch medium 120A and the surface being inspected. The estimated contact pressure is then used to adjust the suction applied to the first suction cup 242A, the second suction cup 242B, the third suction cup 242C, and the fourth suction cup 242D to adjust the contact pressure between the first touch medium 120A and the surface being inspected.

The third suction cup 242C, the fourth suction cup 242D, the fifth suction cup 242E, and the sixth suction cup 242F are positioned around the periphery of the second touch medium 120B. As illustrated, the suction cups 242C, 242D, 242E, 242F are positioned adjacent to the corners of the second touch medium 120B, though any suitable configuration can be used. The second touch medium 120B includes a plurality of markers 138B that are used to estimate the contact pressure between the second touch medium 120B and the surface being inspected. The estimated contact pressure is then used to adjust the suction applied to the third suction cup 242C, the fourth suction cup 242D, the fifth suction cup 242E, and the sixth suction cup 242F to adjust the contact pressure between the second touch medium 120B and the surface being inspected.

The fifth suction cup 242E, the sixth suction cup 242F, the seventh suction cup 242G, and the eighth suction cup 242H are positioned around the periphery of the third touch medium 120C. As illustrated, the suction cups 242E, 242F, 242G, 242H are positioned adjacent to the corners of the third touch medium 120C, though any suitable configuration can be used. The third touch medium 120C includes a plurality of markers 138C that are used to estimate the contact pressure between the third touch medium 120C and the surface being inspected. The estimated contact pressure is then used to adjust the suction applied to the fourth suction cup 242D, the fifth suction cup 242E, the sixth suction cup 242F, the seventh suction cup 242G, and the eighth suction cup to adjust the contact pressure between the third touch medium 120C and the surface being inspected.

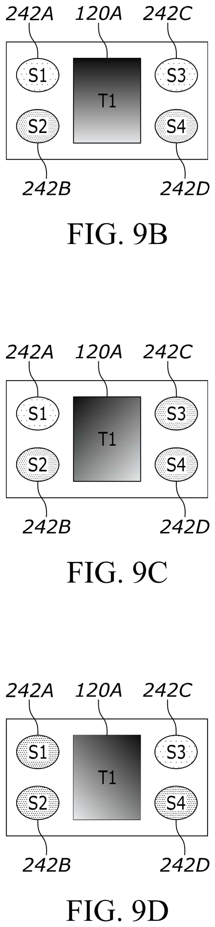

FIG. 9B-9I illustrates exemplary schemes for achieving uniform contact pressure using the first touch medium 120A and the first suction cup 242A, the second suction cup 242B, the third suction cup 242C, and the fourth suction cup 242D. In FIGS. 9B-9I, the dark shading on the touch medium represent weak contact pressure and light shading represents strong contact pressure between the probe and the surface of the component being inspected. With respect to the suction cups, dark shading shows suction cups that need increased suction, and light shading shows suction cups that need decreased suction.

In FIG. 9B, reduced suction is applied to the first suction cup 242A and the third suction cup 242C to adjust the high strong contact pressure on the portion of the first touch medium 120A that is disposed therebetween. Increased suction is applied to the second suction cup 242B and the fourth suction cup 242D to adjust the weak contact pressure on the portion of the first touch medium 120A that is disposed therebetween.

In FIG. 9C reduced suction is applied to the first suction cup 242A to adjust the strong contact pressure on the portion of the first touch medium 120A that is adjacent to the first suction cup 242A. Increased suction is applied to the second suction cup 242B, the third suction cup 242C, and the fourth suction cup 242D to adjust the weak contact pressure on the remainder of the first touch medium 120A.

In FIG. 9D, reduced suction is applied to the third suction cup 242C to adjust the strong contact pressure on the portion of the first touch medium 120A that is adjacent to the third suction cup 242C. Increased suction is applied to the first suction cup 242A, the second suction cup 242B, and the fourth suction cup 242D to adjust the weak contact pressure on the remainder of the first touch medium 120A.

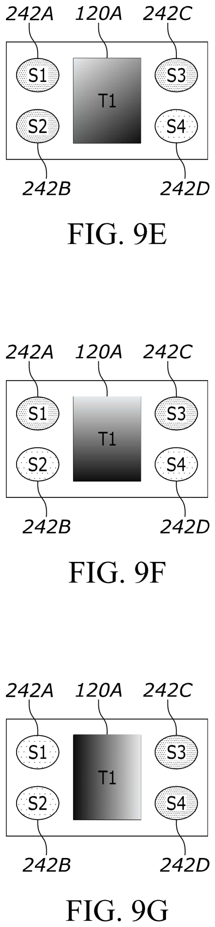

In FIG. 9E, reduced suction is applied to the fourth suction cup 242C to adjust the strong contact pressure on the portion of the first touch medium 120A that is adjacent to the fourth suction cup 242D. Increased suction is applied to the first suction cup 242A, the second suction cup 242B, and the third suction cup 242C to adjust the weak contact pressure on the remainder of the first touch medium 120A.

In FIG. 9F, increased suction is applied to the first suction cup 242A and the third suction cup 242C to adjust the weak strong contact pressure on the portion of the first touch medium 120A that is disposed therebetween. Decreased suction is applied to the second suction cup 242B and the fourth suction cup 242D to adjust the strong contact pressure on the portion of the first touch medium 120A that is disposed therebetween.

In FIG. 9G, decreased suction is applied to the first suction cup 242A and the second suction cup 242B to adjust the strong contact pressure on the portion of the first touch medium 120A that is disposed therebetween. Increased suction is applied to the third suction cup 242C and the fourth suction cup 242D to adjust the weak contact pressure on the portion of the first touch medium 120A that is disposed therebetween.

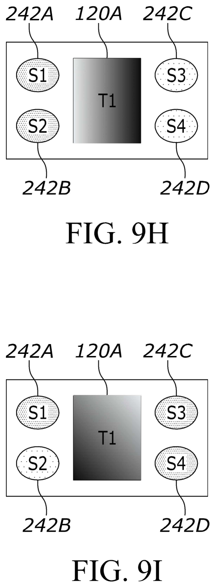

In FIG. 9H, increased suction is applied to the first suction cup 242A and the second suction cup 242B to adjust the weak strong contact pressure on the portion of the first touch medium 120A that is disposed therebetween. Decreased suction is applied to the third suction cup 242C and the fourth suction cup 242D to adjust the strong contact pressure on the portion of the first touch medium 120A that is disposed therebetween.

In FIG. 9I, reduced suction is applied to the second suction cup 242B to adjust the strong contact pressure on the portion of the first touch medium 120A that is adjacent to the second suction cup 242B. Increased suction is applied to the first suction cup 242A, the third suction cup 242C, and the fourth suction cup 242D to adjust the weak contact pressure on the remainder of the first touch medium 120A.

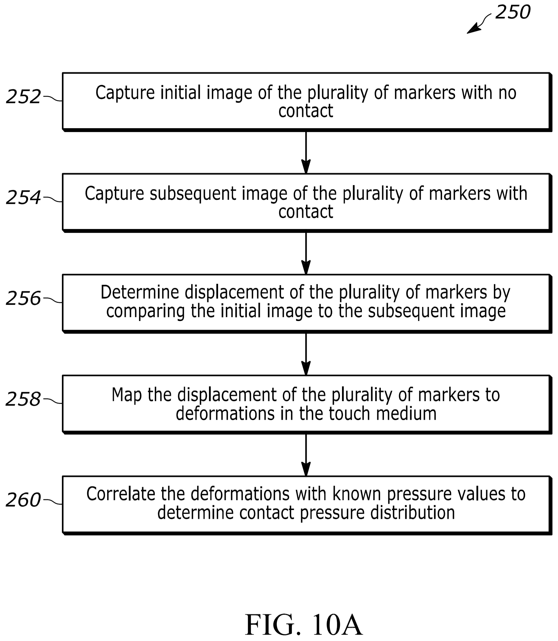

FIG. 10A shows a method 250 for estimating the contact pressure of a probe on the surface that is being inspected. For example, the method provides the contact pressure of the touch medium 120 of the probe 102 on the surface 106 of the component 104. In some embodiments, the method 250 or portions thereof is implemented using the controller 150. Although the following description of the method of manufacturing is described in a particular order, which represents a particular embodiment, it should be noted that the method of manufacturing may be performed in any suitable order. Further, certain steps may be repeated or skipped altogether, and additional steps may be included.

At 252, the controller 150 causes the profilometry sensor apparatus 108 to capture an initial image of the plurality of markers 138 with no contact between the touch medium 120 and the surface 106 of the component 104 being inspected.

At 254, the controller 150 causes the profilometry sensor apparatus 108 to capture a subsequent image of the plurality of markers 138 with the touch medium 120 in contact with the surface 106 of the component 104 being inspected. The controller 150 may cause the touch medium 120 to contact the surface 106 of the component 104 by operating the reversible adhesion mechanism 110 to apply adhesion.

At 256, the controller 150 determines the displacement of the plurality of markers 138 by comparing the initial image to the subsequent image. At 258, the controller 150 maps the displacement of the plurality of markers 138 to deformations in the touch medium 120 due to the contact with the surface 106 of the component 104.

At 260, the controller 150 then correlates the deformations with known pressure values to determine a contact pressure distribution across the touch medium 120.

FIG. 10B shows a method 270 for controlling or adjusting the contact pressure of a probe on the surface that is being inspected. For example, the method can be used to adjust the contact pressure between the touch medium 120 of the probe 102 and the surface 106 of the component 104. In some embodiments, the method 270 or portions thereof is implemented using the controller 150. The method 270 can be used to apply uniform contact pressure between the touch medium 120 and the component 104 being inspected. Although the following description of the method of manufacturing is described in a particular order, which represents a particular embodiment, it should be noted that the method of manufacturing may be performed in any suitable order. Further, certain steps may be repeated or skipped altogether, and additional steps may be included.

At 272, the controller 150 operates the reversible adhesion mechanism 110 to cause the touch medium 120 to contact the surface 106 of the component.

At 274, the controller 150 causes the profilometry sensor apparatus 108 to acquire an image of the plurality of markers 138 in the touch medium 120. The controller 150 then analyzes the image of the plurality of markers to determine an estimated contact pressure distribution that reflects the contact pressure between the touch medium 120 and the component 104 as a function of the position on the touch medium 120.

At 276, the controller 150 compares the estimated contact pressure distribution with a target pressure distribution for the touch medium 120. The target pressure distribution includes the desired contact pressure between the touch medium 120 and the component 140 as a function of the position on the touch medium 120.

At 278, the controller 150 then adjusts the contact pressure using the reversible adhesion mechanism 110 to redistribute pressure on the touch medium 120 based on the comparison. For example, if the estimated pressure distribution indicates that a section of the touch medium 120 is at a pressure lower than the pressure for that section in the target pressure distribution, the controller 150 will increase the adhesive force applied by the reversible adhesion mechanism 110 near that section of the touch medium 120 to bring the pressure to the target.

FIG. 11 illustrates one or more flexible hyperbolic metamaterial (HMM) layers 280 that can be used in the profilometry sensor apparatuses described herein. In some examples, the HMM layers 280 can be used in the profilometry sensor apparatus 108 of the probe 102 shown and described with reference to FIGS. 1A and 2. For example, the HMM layers 280 can be positioned between the touch medium 120 and the light sensor 122 of the profilometry sensor apparatus 108.

Incorporating the HMM layers 280 into the probe 102 allows light to be focused beyond the diffraction limit. Focusing light beyond the diffraction limit reduces the size of the probe 102 without reducing resolution of the optical data acquired by the probe 102. Use of HMMs may achieve resolution enhancements of up to an order of magnitude beyond the diffraction limit. For example, when visible light is used as the light source in the profilometry sensor apparatus, the diffraction limit of visible light is around 200 nm and the use of HMMS can achieve resolutions of down to 20 nm or even smaller. HMMs can also focus light to spots smaller than the wavelength of light, thereby enabling imaging and detection of features at the nanoscale.

By achieving higher resolution with HMMs, the need for large optical components (e.g., lenses and mirrors) in the probe is reduced. This allows for the design of more compact and lightweight optical systems. High-resolution imaging can be achieved with smaller sensors, reducing the overall size and power consumption of the probe.

In the illustrated embodiment, the HMM layers 280 include alternating metal layers 282 and dielectric layers 284. In some embodiments, the HMM layers may include between about 10 to about 50 layers. Because the HMM layers 280 are thin, the HMM layers 280 have no or minimal impact on the motion of the probe.

The metal layers can be made of any suitable metallic material. Examples of suitable metallic materials include but are not limited to silver and gold. In some embodiments, one or more of the metal layers 282 has a thickness in the range of about 5 nanometers (nm) to about 20 nm.

The dielectric layers 284 can be made of any suitable dielectric material. Examples of suitable dielectric materials include but are not limited to silicon dioxide (SiO₂) and titanium dioxide (TiO₂). In some embodiments, one or more of the dielectric layers has a thickness in the range of about 10 nm to about 30 nm.

The HMM layers 280 can be formed via any suitable deposition process. Suitable deposition processes include but are not limited to electron-beam evaporation, sputtering, atomic layer deposition (ALD), chemical vapor deposition (CVD), and molecular beam epitaxy (MBE).

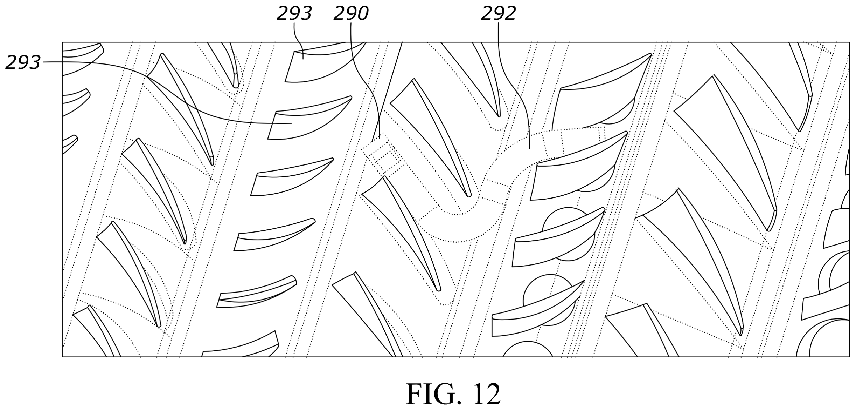

FIG. 12 illustrates an alternative configuration for the probe 102 that is shown and described with reference to FIGS. 1A and 2. FIG. 12 shows a probe 290 coupled to the distal end of a rigidizable guide tube (RGT) 292. The RGT can be or incorporate features of any of the RGTs described in U.S. Patent Application No. 18/915,004, entitled "Insertion Tool for Inspection," filed on October 14, 2024, which is incorporated herein by reference in its entirety. The probe 102 may be the same as the probe 190 shown in FIG. 2, with a difference being that the probe 290 does not include the reversible adhesion mechanism 110 and, instead, uses the RGT 292 to generate the contact pressure between the touch medium and the surface being inspected. The RGT 292 can be used to deploy the probe 290 for inspection. For example, in FIG. 12, the RGT 292 is shown inspecting blades 293 of a gas turbine engine.

In some embodiments, the probe 290 does not include a locomotion actuator 112 for moving the probe along the surface of the component being inspected. Instead, the RGT 292 may be used to move or translate the probe 290 across the surface being inspected. The RGT 292 is a rigidizable tube that can be selectively rigidized. The RGT 292 can be initially flexible for easy insertion and then rigidized to stabilize and orient the probe 102 towards an area of interest. Alternatively, in some embodiments, the probe 290 includes a locomotion actuator 112 to assist with positioning the probe 290 in conjunction with the RGT 292.

In some aspects, the RGT 292 can include a plurality of reconfigurable links that can be arranged to achieve particular predefined shapes or geometries based on the orientation of the links relative to one another.

In some embodiments, when the component being inspected is a component of an engine, such as a gas turbine engine, the RGT 292 may be inserted through an inspection port of the engine.

Though the RGT is described it is to be understood that other robotic arms, such as snake arms or flexible guide tubes could be used in the place of an RGT. A robotic arm may be used in place of or in addition to the locomotion actuators 112 described herein.

Further aspects of the disclosure are provided by the subject matter of the following clauses:
A system for performing tactile profilometry on a component, the system comprising: a stretchable body including an optically clear section, the optically clear section including a measurement window; a profilometry sensor apparatus disposed in the optically clear section of the stretchable body, the profilometry sensor apparatus comprising: a touch medium disposed in the measurement window, the touch medium made from an elastomer that is transparent, semi-transparent, or translucent; a first light source coupled to a first deformable waveguide to illuminate a target surface with a first light beam, the first deformable waveguide defining a first incidence angle between the first light beam and the target surface; a first shaping actuator operatively coupled to the first deformable waveguide to displace the first deformable waveguide; and a light sensor arranged to detect light from the first light source that is reflected from the target surface of the touch medium; and a controller communicatively coupled to the light sensor and the first shaping actuator, the controller configured to receive optical data from the light sensor, the optical data indicative of a surface profile of the component, and operate the first shaping actuator to adjust the first incidence angle.

The system of any preceding clause, the touch medium defining a first side adjacent to an inspection face of the stretchable body and a second side opposite the first side, the second side of the touch medium comprising a reflective layer, wherein the target surface is the reflective layer.

The system of any preceding clause, wherein the target surface is a surface of the component.

The system of any preceding clause, wherein the controller is further configured to receive optical data from the light sensor and detect deformations in the touch medium based on the optical data, the deformations indicative of a surface profile of the component.

The system of any preceding clause, wherein the controller is configured to cause the first shaping actuator to adjust the first incidence angle by moving the first deformable waveguide to achieve a plurality of first incidence angles and acquire optical data at the plurality of first incidence angles.

The system of any preceding clause, wherein the profilometry sensor apparatus further comprises: a second light source coupled to a second deformable waveguide to illuminate the target surface of the touch medium with a second light beam, the second deformable waveguide defining a second incidence angle between the first light beam and the target surface; a second shaping actuator operatively coupled to the second deformable waveguide to displace the first deformable waveguide; and wherein the light sensor is arranged to detect light from the second light source that is reflected from the target surface.

The system of any preceding clause, wherein the stretchable body is made from an elastomeric material.

The system of any preceding clause, further comprising: a reversible adhesion mechanism to generate contact pressure applied by the touch medium on the surface of the component, the reversible adhesion mechanism is coupled to the stretchable body.

The system of any preceding clause, wherein the touch medium further includes a plurality of markers disposed in the elastomer.

The system of any preceding clause, wherein the reversible adhesion mechanism is operatively coupled to the controller, and wherein the controller is further configured to: determine a strain in the elastomer based on a distribution of the plurality of markers; and actively control the reversible adhesion mechanism based on the strain in the elastomer.

The system of any preceding clause, wherein the plurality of markers are opaque particles.

The system of any preceding clause, wherein the opaque particles are made from an oil-soluble paint.

The system of any preceding clause, wherein the reversible adhesion mechanism comprises an array of suction cups.

The system of any preceding clause, the array of suction cups is disposed around the touch medium.

The system of any preceding clause, wherein the controller is in communication with the suction cups and the tactile pads, and the controller is configured to: capture an initial image of the plurality of markers in the touch medium when the touch medium is not in contact with the surface of the component; capture a subsequent image of the plurality of markers in the touch medium when the touch medium is in contact with the surface of the component; determine a displacement of the plurality of markers by comparing the initial image with the subsequent image; map the displacement of the plurality of markers to deformations in the elastomer of the touch medium due to the contact with the surface of the component; and correlate the deformations with known pressure values to determine a contact pressure distribution across the touch medium.

The system of any preceding clause, wherein the controller is further configured to: operate the reversible adhesion mechanism to cause the touch medium to contact the surface of the component; analyze an image the plurality of markers to determine an estimated contact pressure distribution on the touch medium; compare the estimated contact pressure distribution with a target pressure distribution for the touch medium; and adjust a force applied to the touch medium using the reversible adhesion mechanism to redistribute pressure on the touch medium based on the comparison.

The system of any preceding clause, wherein the first light source includes one or more LEDs.

The system of any preceding clause, wherein the light sensor is a camera.

The system of any preceding clause, further comprising: a locomotion actuator coupled to the stretchable body, the locomotion actuator to move the stretchable body along a surface of the component.

The system of any preceding clause, wherein the locomotion actuator is operatively coupled to the controller, and wherein the controller is configured to: operate the locomotion actuator to move the stretchable body along the surface of the component to position the stretchable body at a plurality of inspection locations on the surface; and operate the profilometry sensor apparatus to illuminate the target surface and acquire optical data via the light sensor at the plurality of inspection locations.

The system of any preceding clause, wherein the controller is further configured to stitch together the optical data from the plurality of inspection locations to generate a composite view of the surface of the component.

The system of any preceding clause, wherein the light sensor is a camera having at least one of a low resolution or a small field of view.

The system of any preceding clause, wherein the controller is further configured to continuously stitch together the optical data from the plurality of inspection locations as the locomotion actuator moves the stretchable body.

The system of any preceding clause, wherein the controller is further configured to determine one or more gaps in the composite view, identify one or more additional inspection locations based on the one or more gaps, and operate the locomotion actuator to move the stretchable body to the one or more additional inspection locations to acquire additional optical data.

The system of any preceding clause, wherein the locomotion actuator is at least one of an inchworm actuator, a crawling actuator, or a remote push/pull actuator.

The system of any preceding clause, wherein the inchworm actuator comprises a plurality of piezoelectric actuators to achieve gripping and releasing actions to generate linear motion of the stretchable body.

The system of any preceding clause, wherein the crawling actuator comprises a plurality of pneumatic actuators to inflate air chambers in the stretchable body to bend the stretchable body and achieve a crawling motion.

The system of any preceding clause, wherein the remote push/pull actuator comprises a linear actuator to generate movement of the stretchable body by alternating between pushing and pulling forces.

The system of any preceding clause, further comprising a lens disposed between the touch medium and the light sensor.

The system of any preceding clause, wherein the lens is an autofocus lens.

The system of any preceding clause, further comprising a mirror disposed between the lens and the light sensor to guide the light reflected form the target surface to the light sensor.

The system of any preceding clause, further comprising: a backlighting source arranged to illuminate the target surface; and wherein the backlighting source is operatively coupled to the controller and the controller is further configured to adjust an illumination level of the backlighting source based on the optical data.

The system of any preceding clause, further comprising one or more layers of flexible hyperbolic metamaterials disposed between the touch medium and the light sensor to focus the light reflected from the target surface beyond a diffraction limit.

The system of any preceding clause, wherein the one or more layers of flexible hyperbolic metamaterials include alternating metal layers and dielectric layers.

The system of any preceding clause, wherein the metal layers comprise at least one of silver or gold and have a thickness in the range of about 5 nanometers to about 20 nanometers.

The system of any preceding clause, wherein the dielectric layers comprise at least one of silicon dioxide (SiO₂) or titanium dioxide (TiO₂) and have a thickness in the range of about 10 nanometers to about 30 nanometers.

The system of any preceding clause, wherein the one or more layers of flexible hyperbolic metamaterials includes between 10 to 50 layers.

The system of any preceding clause, wherein the one or more layers of flexible hyperbolic metamaterials are formed via at least one of electron-beam evaporation, sputtering, atomic layer deposition, chemical vapor deposition, or molecular beam epitaxy.

The system of any preceding clause, wherein the first deformable waveguide includes a core portion and a cladding portion, wherein the core portion has a refractive index (n1) in the range of about 1.3 to about 1.5 and wherein the cladding portion has a refractive index (n2) in the range of about 0.9 to about 1.1.

The system of any preceding clause, wherein the core portion is made from an optically clear silicone material.

The system of any preceding clause, wherein the optically clear silicone material comprises at least one of poly(methyl methacrylate) (PMMA) or polydimethylsiloxane (PDMS).

The system of any preceding clause, wherein the first shaping actuator is at least one of a pneumatic actuator, a dielectric elastomer, or a tendon that pushes or pulls on the first deformable waveguide to adjust the first incidence angle.

The system of any preceding clause, wherein the first shaping actuator is integrally molded in the stretchable body or 3D printed on the stretchable body.

The system of any preceding clause, wherein the controller is further configured to: cause the first shaping actuator to adjust the first deformable waveguide to set the first incidence angle at a low incidence angle; receive optical data from the light sensor at the first incidence angle; determine at least one metric based on the optical data acquired at the low incidence angle; determine whether the at least one metric is within a predetermine threshold value; and upon determining that the at least one metric is not within the predetermine threshold value, adjust the first deformable waveguide via the first shaping actuator to set the first incidence angle based on at least one metric.

The system of any preceding clause, wherein the at least one metric includes one or more of a defect edge sharpness, a contrast ratio, or a defect visibility.

The system of any preceding clause, wherein the controller is further configured to: increase the first incidence angle via the first shaping actuator upon determining the at least one metric indicates inadequate shadow detail.

The system of any preceding clause, wherein the controller is further configured to: decrease the first incidence angle via the first shaping actuator upon determining the at least one metric indicates at least one of overexposure, insufficient feature contrast, or large defects.

The system of any preceding clause, further comprising: a locomotion actuator coupled to the stretchable body, the locomotion actuator to move the stretchable body along a surface of the component; wherein the controller is configured to: cause the locomotion actuator to move the stretchable body to a plurality of inspection locations on the surface of the component to collect optical data; receive optical data from the light sensor at the plurality of inspection locations to determine optical flow data for the stretchable body; determine odometry data the stretchable body based on the optical flow data; and adjust the locomotion actuator to move the stretchable body based on the odometry data.

The system of any preceding clause, wherein the profilometry sensor apparatus comprises a calibration target.

A system for performing tactile profilometry on a component, the system comprising: a rigidizable guide tube; a profilometry sensor apparatus coupled to the rigidizable guide tube, the profilometry sensor apparatus comprising: a touch medium comprising a membrane made from a transparent elastomer; a light source coupled to a deformable waveguide to illuminate a target surface with a light beam, the light source disposed on a first side of the touch medium, the deformable waveguide defining a incidence angle between the light beam and the target surface; a shaping actuator operatively coupled to the deformable waveguide to displace the deformable waveguide; a light sensor arranged to detect light from the light source that is reflected from the target surface; and a controller communicatively coupled to the light sensor and the shaping actuator, the controller configured to, based on optical data received form the light sensor, operate the shaping actuator to adjust the incidence angle between the light beam and the target surface and to operate the rigidizable guide tube.

The system of any preceding clause, wherein the profilometry sensor apparatus further comprises: a second light source coupled to a second deformable waveguide to illuminate the target surface with a second light beam, the second deformable waveguide defining a second incidence angle between the second light beam and the target surface; a second shaping actuator operatively coupled to the second deformable waveguide to displace the second deformable waveguide; and wherein the light sensor is arranged to detect light from the second light source and the second light source that is reflected from the target surface.

The system of any preceding clause, wherein the controller is configured to adjust a contact pressure between the profilometry sensor apparatus and the component via the rigidizable guide tube based on the optical data.

The system of any preceding clause, wherein the controller is configured to move the profilometry sensor apparatus to position the profilometry sensor apparatus on the component via the rigidizable guide tube.

The system of any preceding clause, wherein the reversible adhesion mechanism comprises an array of suction cups, and wherein the controller is in communication with the suction cups, and the controller is configured to: capture an initial image of the plurality of markers in the touch medium when the touch medium is not in contact with the target surface of the component; capture a subsequent image of the plurality of markers in the touch medium when the touch medium is in contact with the target surface of the component; determine a displacement of the plurality of markers by comparing the initial image with the subsequent image; map the displacement of the plurality of markers to deformations in the elastomer of the touch medium due to the contact with the target surface of the component; and correlate the deformations with known pressure values to determine a contact pressure distribution across the touch medium.

The system of any preceding clause, wherein the controller is further configured to: operate the reversible adhesion mechanism to cause the touch medium to contact the target surface of the component; analyze an image the plurality of markers to determine an estimated contact pressure distribution on the touch medium; compare the estimated contact pressure distribution with a target pressure distribution for the touch medium; and adjust a force applied to the touch medium using the reversible adhesion mechanism to redistribute pressure on the touch medium based on the comparison.

A system for performing tactile profilometry on a component, the system comprising: a rigidizable guide tube; a profilometry sensor apparatus coupled to the rigidizable guide tube, the profilometry sensor apparatus comprising: a touch medium comprising a membrane made from a transparent elastomer; a light source coupled to a deformable waveguide to illuminate a target surface with a light beam, the light source disposed on a first side of the touch medium, the deformable waveguide defining a incidence angle between the light beam and the target surface; a shaping actuator operatively coupled to the deformable waveguide to displace the deformable waveguide; and a light sensor arranged to detect light from the light source that is reflected from the target surface; and a controller communicatively coupled to the light sensor and the shaping actuator, the controller configured to, based on optical data received form the light sensor, operate the shaping actuator to adjust the incidence angle between the first beam and the target surface and to operate the rigidizable guide tube.

The system of any preceding clause, wherein the controller is configured to adjust a contact pressure between the profilometry sensor apparatus and the component via the rigidizable guide tube based on the optical data.

The system of any preceding clause, wherein the controller is configured to move the profilometry sensor apparatus to position the profilometry sensor apparatus on the component via the rigidizable guide tube.

A method comprising using the system of any preceding clause to perform tactile profilometry on a component in an engine.

The method of any preceding clause, wherein the tactile profilometry is performed while the engine is on a wing of an aircraft.

## Claims

1. A system (100) for performing tactile profilometry on a component (104, 140), the system (100) comprising:
a stretchable body (172) including an optically clear section (178), the optically clear section (178) including a measurement window (176);
a profilometry sensor apparatus (108) disposed in the optically clear section (178) of the stretchable body (172), the profilometry sensor apparatus (108) comprising:
a touch medium (120) disposed in the measurement window (176), the touch medium (120) made from an elastomer that is transparent, semi-transparent, or translucent;
a first light source (124) coupled to a first deformable waveguide (126) to illuminate a target surface (106) with a first light beam, the first deformable waveguide (126) defining a first incidence angle between the first light beam and the target surface (106);
a first shaping actuator (128) operatively coupled to the first deformable waveguide (126) to displace the first deformable waveguide (126); and
a light sensor (122) arranged to detect light from the first light source (124) that is reflected from the target surface (106) of the touch medium (120); and
a controller (150) communicatively coupled to the light sensor (122) and the first shaping actuator (128), the controller (150) configured to receive optical data (158) from the light sensor (122), the optical data (158) indicative of a surface (106) profile of the component (104, 140), and operate the first shaping actuator (128) to adjust the first incidence angle.

2. The system (100) of claim 1, the touch medium (120) defining a first side (176A) adjacent to an inspection face of the stretchable body (172) and a second side (176B) opposite the first side (176A), the second side (176B) of the touch medium (120) comprising a reflective layer (136), wherein the target surface (106) is the reflective layer (136).

3. The system (100) of any preceding claim, wherein the target surface (106) is a surface (106) of the component (104, 140).

4. The system (100) of any preceding claim, wherein the profilometry sensor apparatus (108) further comprises:
a second light source (130) coupled to a second deformable waveguide (132) to illuminate the target surface (106) of the touch medium (120) with a second light beam, the second deformable waveguide (132) defining a second incidence angle between the first light beam and the target surface (106);
a second shaping actuator (134) operatively coupled to the second deformable waveguide (132) to displace the first deformable waveguide (126); and
wherein the light sensor (122) is arranged to detect light from the second light source (130) that is reflected from the target surface (106).

5. The system (100) of any preceding claim, further comprising:
a reversible adhesion mechanism (110, 240) to generate contact pressure applied by the touch medium (120) on the target surface (106) of the component (104, 140), the reversible adhesion mechanism (110, 240) is coupled to the stretchable body (172).

6. The system (100) of claim 5, wherein the touch medium (120) further includes a plurality of markers (138) disposed in an elastomer.

7. The system (100) of claim 6, wherein the reversible adhesion mechanism (110, 240) is operatively coupled to the controller (150), and wherein the controller (150) is further configured to:
determine a strain in the elastomer based on a distribution of the plurality of markers (138); and
actively control the reversible adhesion mechanism (110, 240) based on the strain in the elastomer.

8. The system (100) of any of claims 6-7, wherein the reversible adhesion mechanism (110, 240) comprises an array of suction cups, and wherein the controller (150) is in communication with the suction cups, and the controller (150) is configured to:
capture an initial image of the plurality of markers (138) in the touch medium (120) when the touch medium (120) is not in contact with the target surface (106) of the component (104, 140);
capture a subsequent image of the plurality of markers (138) in the touch medium (120) when the touch medium (120) is in contact with the target surface (106) of the component (104, 140);
determine a displacement of the plurality of markers (138) by comparing the initial image with the subsequent image;
map the displacement of the plurality of markers (138) to deformations in the elastomer of the touch medium (120) due to the contact with the target surface (106) of the component (104, 140); and
correlate the deformations with known pressure values to determine a contact pressure distribution across the touch medium (120).

9. The system (100) of any of claims 6-8, wherein the controller (150) is further configured to:
operate the reversible adhesion mechanism (110, 240) to cause the touch medium (120) to contact the target surface (106) of the component (104, 140);
analyze an image the plurality of markers (138) to determine an estimated contact pressure distribution on the touch medium (120);
compare the estimated contact pressure distribution with a target pressure distribution for the touch medium (120); and
adjust a force applied to the touch medium (120) using the reversible adhesion mechanism (240) (110) to redistribute pressure on the touch medium (120) based on the comparison.

10. The system (100) of any preceding claim, further comprising a locomotion actuator (112) coupled to the stretchable body (172), the locomotion actuator (112) to move the stretchable body (172) along a surface (106) of the component (140) (104), wherein the locomotion actuator (112) is operatively coupled to the controller (150), and wherein the controller (150) is configured to:
operate the locomotion actuator (112) to move the stretchable body (172) along the surface (106) of the component (104, 140) to position the stretchable body (172) at a plurality of inspection locations on the surface (106); and
operate the profilometry sensor apparatus (108) to illuminate the target surface (106) and acquire optical data (158) via the light sensor (122) at the plurality of inspection locations.

11. The system (100) of claim 10, wherein the controller (150) is further configured to stitch together the optical data (158) from the plurality of inspection locations to generate a composite view of the surface (106) of the component (140) (104).

12. The system (100) of claim 11, wherein the controller (150) is further configured to determine one or more gaps in the composite view, identify one or more additional inspection locations based on the one or more gaps, and operate the locomotion actuator (112) to move the stretchable body (172) to the one or more additional inspection locations to acquire additional optical data (158).

13. The system (100) of any preceding claim, further comprising:
a backlighting source (114) arranged to illuminate the target surface (106); and
wherein the backlighting source (114) is operatively coupled to the controller (150) and the controller (150) is further configured to adjust an illumination level of the backlighting source (114) based on the optical data (158).

14. The system (100) of any preceding claim, further comprising one or more layers of flexible hyperbolic metamaterials disposed between the touch medium (120) and the light sensor (122) to focus the light reflected from the target surface (106) beyond a diffraction limit.

15. A method comprising using the system (100) of any of claims 1-14 to perform tactile profilometry on a component (104, 140) in an engine.
